# EUROPEAN PATENT APPLICATION

(11) **EP 4 769 017 A1**
(43) Date of publication of application: **01.07.2026**
(21) Application number: 24885986.0
(22) Date of filing: 23.08.2024
(51) Int. Cl.: G03B 3/10, G03B 13/36, G03B 17/12, H04N 23/54, H04N 23/55, G02B 7/04

(54) **CAMERA MODULE INCLUDING CARRIER**

(30) Priority: 31.10.2023 KR 20230147784; 15.12.2023 KR 20230182831
(71) Applicant: Samsung Electronics Co., Ltd., Suwon-si, Gyeonggi-do 16677 (KR)
(72) Inventor: JO, Jiyeon, Suwon-si, Gyeonggi-do 16677 (KR); RHO, Hyungjin, Suwon-si, Gyeonggi-do 16677 (KR)
(74) Representative: Nederlandsch Octrooibureau
(86) International application number: PCT/KR2024/012607
(87) International publication number: WO 2025/095306

(57) **Abstract**

This camera module may comprise: a lens having an optical axis; a lens housing configured to accommodate the lens; and a carrier configured to carry the lens housing along the optical axis. The carrier may include: a first carrier part configured to support a first portion of the lens housing; a second carrier part configured to support a second portion of the lens housing opposite to the first portion of the lens housing, wherein the second carrier part is a separate component from the first carrier part; and a first area in which a third portion of the lens housing between the first portion and the second portion of the lens housing is open.

## Description

### TECHNICAL FIELD

The disclosure generally relates to a camera module, for example, a camera module including a carrier. The disclosure also relates to an electronic device including a camera module.

### BACKGROUND ART

Technologies for carrying a lens in a direction along an optical axis and performing auto-focus or zoom are being developed. For example, a carrier may carry a lens in a direction along an optical axis with an air gap with a camera housing.

The above description is information the inventor(s) acquired during the course of conceiving the present disclosure, or already possessed at the time, and is not necessarily art publicly known before the present application is filed.

### DISCLOSURE OF THE INVENTION

### TECHNICAL SOLUTIONS

According to an example embodiment, a camera module may include: a lens having an optical axis, a lens housing configured to house the lens, and a carrier configured to carry the lens housing along the optical axis. The carrier may include a first carrier part configured to support a first portion of the lens housing, a second carrier part configured to support a second portion of the lens housing, opposite to the first portion of the lens housing, wherein the second carrier part is a separate component from the first carrier part, and a first area in which a third portion of the lens housing between the first portion and the second portion of the lens housing is open.

According to an example embodiment, a camera module may include: a lens having an optical axis, a lens housing configured to house the lens, and a carrier configured to carry the lens housing along the optical axis, in which the carrier may include a first carrier part configured to support a first portion of the lens housing, a second carrier part configured to support a second portion of the lens housing, opposite to the first portion of the lens housing, wherein the second carrier part is integrally formed with the first carrier part, a first area in which a third portion of the lens housing between the first portion and the second portion of the lens housing is open, a second area in which the lens housing is not disposed, and a first baffle positioned in the second area.

### BRIEF DESCRIPTION OF THE DRAWINGS

The foregoing and other aspects, features, and advantages of certain embodiments in the present disclosure will be more apparent from the following detailed description, taken in conjunction with the accompanying drawings, in which:
FIG. 1 is a block diagram illustrating an example electronic device in a network environment, according to various embodiments.
FIG. 2 is a block diagram illustrating an example configuration of a camera module according to various embodiments.
FIG. 3 is a perspective view of an example electronic device in one direction, according to various embodiments.
FIG. 4 is a perspective view of an example electronic device in another direction, according to various embodiments.
FIG. 5 is a perspective view of an example camera module according to various embodiments.
FIG. 6 is a diagram illustrating plan view of an example camera module according to various embodiments.
FIG. 7 is an exploded perspective view of an example camera module, according to various embodiments.
FIG. 8 is a cross-sectional view taken along line 8-8 of the camera module of FIG. 6, according to various embodiments.
FIG. 9 is a perspective view of a second lens assembly and a first carrier of a camera module, according to various embodiments.
FIG. 10 is a perspective view of a first carrier of a camera module in one direction, according to various embodiments.
FIG. 11 is a perspective view of a lens assembly and a first carrier of a camera module in another direction, according to various embodiments.
FIG. 12 is a cross-sectional view taken along line 12-12 of the camera module of FIG. 9, according to various embodiments.
FIG. 13 is a diagram illustrating a plan view of a portion of a camera module, according to various embodiments.
FIG. 14 is a cross-sectional view taken along line 14-14 of the camera module of FIG. 13, according to various embodiments.
FIG. 15 is a cross-sectional view taken along line 15-15 of the camera module of FIG. 13, according to various embodiments.
FIG. 16 is a perspective view of a carrier of a camera module, according to various embodiments.
FIG. 17 is a perspective view of a carrier of a camera module, according to various embodiments.
FIG. 18 is a perspective view of a lens assembly and a carrier of a camera module, according to various embodiments.
FIG. 19 is a perspective view of a lens assembly and a carrier of a camera module, according to various embodiments.
FIG. 20 is a perspective view of a lens assembly and a carrier of a camera module, according to various embodiments.
FIG. 21 is a perspective view of a lens assembly and a carrier of a camera module, according to various embodiments.
FIG. 22 is a perspective view of a lens assembly and a carrier of a camera module, according to various embodiments.
FIG. 23 is a perspective view of a lens assembly and a carrier of a camera module according to various embodiments.
FIG. 24 is a perspective view of a lens assembly and a carrier of a camera module according to various embodiments.
FIG. 25 is a perspective view of a carrier of a camera module, according to various embodiments.
FIG. 26 is a perspective view of a carrier of a camera module, according to various embodiments.
FIG. 27 is a perspective view of a carrier of a camera module, according to various embodiments.

### BEST MODE FOR CARRYING OUT THE INVENTION

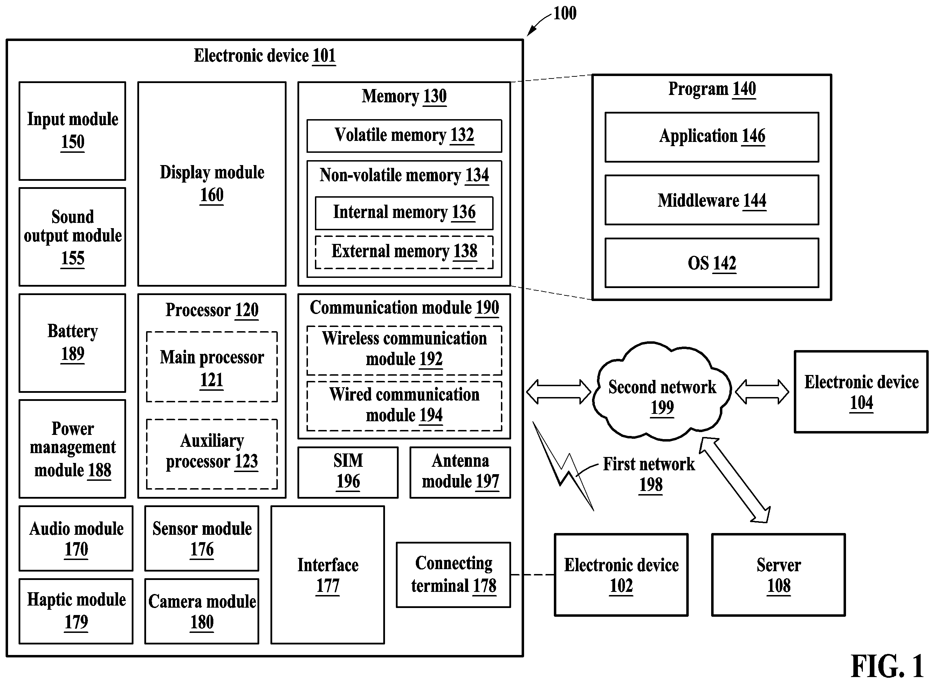

FIG. 1 is a block diagram illustrating an example electronic device in a network environment, according to various embodiments.

Referring to FIG. 1, an electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In various embodiments, at least one of the components (e.g., the connecting terminal 178) may be omitted from the electronic device 101, or one or more other components may be added to the electronic device 101. In various embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an ISP or a CP) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150 or output the sound via the sound output module 155 or an external electronic device (e.g., the electronic device 102) (e.g., a speaker or headphone) directly or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

The connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, ISPs, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently from the processor 120 (e.g., the AP) and support a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a PCB, a RFIC disposed on a first surface (e.g., the bottom surface) of the PCB, or adjacent to the first surface and capable of supporting a designated high-frequency band (e.g., the mmWave band), and a plurality of antennas (e.g., array antennas) disposed on a second surface (e.g., the top or a side surface) of the PCB, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an Internet-of-Things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used in connection with various embodiments of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include code generated by a compiler or code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

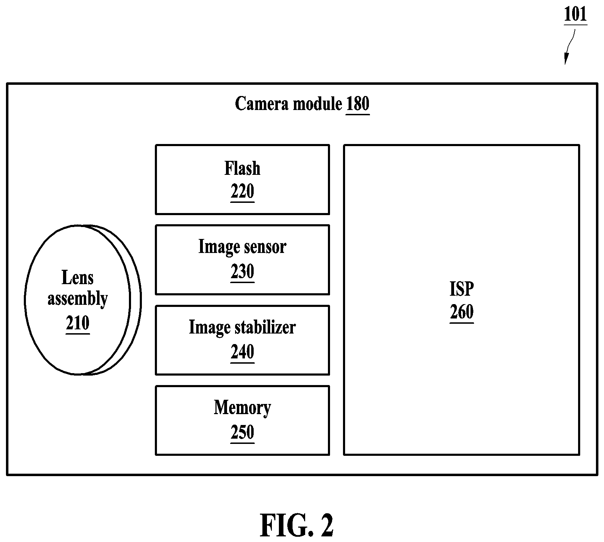

FIG. 2 is a block diagram illustrating an example configuration of a camera module according to various embodiments.

Referring to FIG. 2, the camera module 180 may include a lens assembly 210, a flash 220, an image sensor 230, an image stabilizer 240, memory 250 (e.g., buffer memory), or an ISP 260. The lens assembly 210 may collect light emitted from an object that is a target of which an image is to be captured. The lens assembly 210 may include one or more lenses. According to an embodiment, the camera module 180 may include a plurality of lens assemblies 210. In this case, the camera module 180 may form, for example, a dual camera, 360-degree camera, or spherical camera. A portion of the plurality of lens assemblies 210 may have the same lens properties (e.g., an angle of view, focal length, auto focus, f number, or optical zoom), or at least one of the plurality of lens assemblies 210 may have one or more lens properties that are different from those of other lens assemblies. The lens assembly 210 may include, for example, a wide-angle lens or tele-angle lens.

The flash 220 may emit light to be used to enhance light emitted or reflected from the object. According to an embodiment, the flash 220 may include one or more light-emitting diodes (LEDs) (e.g., a red-green-blue (RGB) LED, a white LED, an IR LED, or an ultraviolet (UV) LED) or a xenon lamp. The image sensor 230 may obtain an image corresponding to the object by converting light emitted or reflected from the object and transmitted through the lens assembly 210 into an electrical signal. According to an embodiment, the image sensor 230 may include, for example, one image sensor selected from among image sensors having different properties, such as, for example, an RGB sensor, a black and white (BW) sensor, an IR sensor, or a UV sensor, a plurality of image sensors having the same property, or a plurality of image sensors having different properties. Each image sensor included in the image sensor 230 may be implemented using, for example, a charge-coupled device (CCD) sensor or a complementary metal-oxide-semiconductor (CMOS) sensor.

The image stabilizer 240 may move at least one lens included in the lens assembly 210 or the image sensor 230 in a specific direction, or control an operation characteristic (e.g., adjust the read-out timing) of the image sensor 230, in response to movement of the camera module 180 or the electronic device 101 including the camera module 180. This may compensate for at least a portion of a negative effect of the movement on an image to be captured. According to an embodiment, the image stabilizer 240 may sense such a movement by the camera module 180 or the electronic device 101 using a gyro sensor (not shown) or an acceleration sensor (not shown) disposed inside or outside the camera module 180. According to an embodiment, the image stabilizer 240 may be implemented, for example, as an optical image stabilizer. The memory 250 may at least temporarily store at least a portion of the image obtained through the image sensor 230 for a subsequent image processing task. For example, when image acquisition is delayed by a shutter or a plurality of images is obtained at a high speed, an obtained original image (e.g., a Bayer-patterned image or high-resolution image) may be stored in the memory 250 and a copy image (e.g., a low-resolution image) corresponding to the original image may be previewed through the display module 160. Subsequently, when a specified condition (e.g., a user input or system command) is satisfied, at least a portion of the original image stored in the memory 250 may be obtained and processed by, for example, the ISP 260. According to an embodiment, the memory 250 may be configured as at least part of the memory 130 or as a separate memory that is operated independently from the memory 130.

The ISP 260 may perform one or more image processing operations on the image obtained through the image sensor 230 or the image stored in the memory 250. The one or more image processing operations may include, for example, depth map generation, three-dimensional (3D) modeling, panorama generation, feature point extraction, image synthesis, or image compensation (e.g., noise reduction, resolution adjustment, brightness adjustment, blurring, sharpening, or softening). Additionally or alternatively, the ISP 260 may control at least one of the components (e.g., the image sensor 230) included in the camera module 180 (e.g., control an exposure time, read-out timing, and the like). The image processed by the ISP 260 may be stored again in the memory 250 for further processing or be provided to an external component (e.g., the memory 130, the display module 160, the electronic device 102, the electronic device 104, or the server 108) of the camera module 180. According to an embodiment, the ISP 260 may be configured as at least part of the processor 120 or as a separate processor operated independently from the processor 120. When the ISP 260 is configured as a processor separate from the processor 120, at least one image processed by the ISP 260 may be displayed as it is or be displayed through the display module 160 after additional image processing is performed by the processor 120.

According to an embodiment, the electronic device 101 may include a plurality of camera modules 180 having different properties or functions. In this case, for example, at least one of the plurality of camera modules 180 may be a wide-angle camera, and at least another one of the plurality of camera modules 180 may be a tele-angle camera. Similarly, at least one of the plurality of camera modules 180 may be a front camera, and at least another one of the plurality of camera modules 180 may be a rear camera.

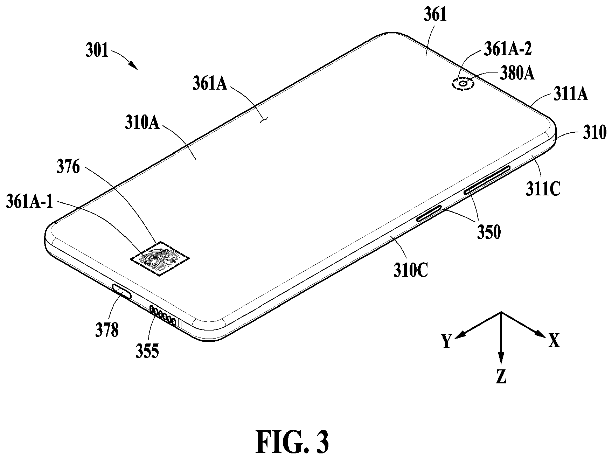

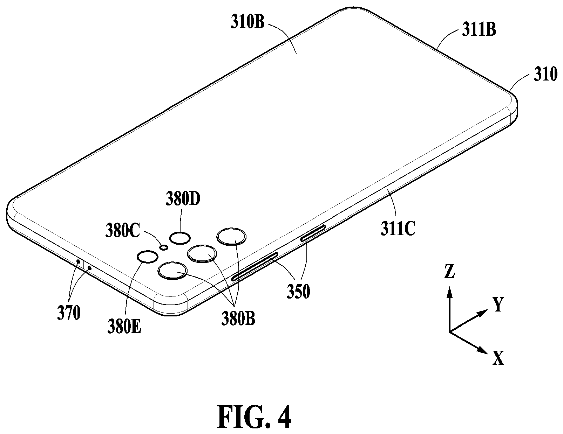

FIG. 3 is a perspective view of an electronic device, according to various embodiments. FIG. 4 is a perspective view of the electronic device, according to various embodiments.

Referring to FIGS. 3 and 4, an electronic device 301 (e.g., the electronic device 101 of FIG. 1) may include a housing 310 including a first surface 310A (e.g., a front surface), a second surface 310B (e.g., a rear surface), and a third surface 310C (e.g., a side surface) enclosing a space between the first surface 310A and the second surface 310B. The first surface 310A may be formed by a first plate 311A of which at least a portion is substantially transparent. For example, the first plate 311A may include a polymer plate or a glass plate including at least one coating layer. The second surface 310B may be formed by a second plate 311B that is substantially opaque. For example, the second plate 311B may be formed of coated or tinted glass, ceramic, polymer, metal (e.g., aluminum, stainless steel (STS), or magnesium), or a combination thereof. The third surface 310C may be formed by a frame 311C that is coupled to the first plate 311A and the second plate 311B and includes a metal and/or polymer. The second plate 311B and the frame 311C may be formed monolithically. The second plate 311B and the frame 311C may be formed of substantially the same material (e.g., aluminum).

The electronic device 301 may include an input module 350 (e.g., the input module 150 of FIG. 1). The input module 350 may be disposed on the third surface 310C. The input module 350 may include at least one key input device. For example, the key input device may include one or more mechanical actuators (e.g., buttons), one or more capacitors, and/or one or more inductors.

The electronic device 301 may include a sound output module 355 (e.g., the sound output module 155 of FIG. 1). The sound output module 355 may be disposed on the third surface 310C. The sound output module 355 may include one or more holes.

The electronic device 301 may include a display module 361 (e.g., the display module 160 of FIG. 1). The display module 361 may be disposed on the first surface 310A. The display module 361 may be visible through at least a portion of the first plate 311A. The display module 361 may have a shape that is substantially the same as the shape of an outer edge of the first plate 311A. The periphery of the display module 361 may substantially coincide with the outer edge of the first plate 311A. The display module 361 may include a touch sensing circuit, a pressure sensor for measuring the intensity (pressure) of a touch, and/or a digitizer for detecting a magnetic-type stylus pen. The display module 361 may include a screen display area 361A that is visible to display content using pixels. The screen display area 361A may include a sensing area 361A-1. The sensing area 361A-1 may overlap at least a partial area of the screen display area 361A. The sensing area 361A-1 may allow transmission of an input signal related to a sensor module 376 (e.g., the sensor module 176 of FIG. 1). The sensing area 361A-1 may display content, similarly to the screen display area 361A that does not overlap the sensing area 361A-1. For example, the sensing area 361A-1 may display the content while the sensor module 376 is not operating. At least a portion of a camera area 361A-2 may overlap the screen display area 361A. The screen display area 361A may include the camera area 361A-2. The camera area 361A-2 may allow transmission of an optical signal related to a first camera module 380A (e.g., the camera module 180 of FIG. 1 and/or the camera module 180 of FIG. 2). At least a portion of the camera area 361A-2, which overlaps the screen display area 361A, may display content, similarly to the screen display area 361A that does not overlap the camera area 361A-2. For example, the camera area 361A-2 may display the content while the first camera module 380A is not operating. At least a portion of the camera area 361A-2 may overlap the screen display area 361A. The screen display area 361A may include the camera area 361A-2. The camera area 361A-2 may allow transmission of an optical signal related to the first camera module 380A (e.g., the camera module 180 of FIG. 1 and/or the camera module 180 of FIG. 2). The camera area 361A-2 may also be referred to as a "display hole." The camera area 361A-2 may have a substantially circular or oval shape. In an embodiment not shown, the display module 361 may include at least one or a combination of an audio module 370, the sensor module 376, the first camera module 380A, or a light-emitting element (not shown) on a rear surface (e.g., a surface in a +Z direction) of the screen display area 361A. For example, in the electronic device 301, a camera module (e.g., the first camera module 380A) may be disposed on a rear surface of at least one of the first surface 310A (e.g., a front surface) or the third surface 310C (e.g., a side surface), facing the first surface 310A and/or the third surface 310C. For example, the first camera module 380A may not be visually exposed to the screen display area 361A and may include an under-display camera (UDC), which may also be referred to as an "under-panel camera (UPC)."

The electronic device 301 may include the audio module 370 (e.g., the audio module 170 of FIG. 1). The audio module 370 may be disposed on the third surface 310C. The audio module 370 may obtain a sound through at least one hole.

The electronic device 301 may include the sensor module 376. The sensor module 376 may be disposed on the first surface 310A. The sensor module 376 may form the sensing area 361A-1 in at least a portion of the screen display area 361A. The sensor module 376 may receive an input signal transmitted through the sensing area 361A-1 and generate an electrical signal based on the received input signal. For example, the input signal may have a designated physical quantity (e.g., heat, light, temperature, sound, pressure, or ultrasound). The input signal may include a signal related to biometric information (e.g., a fingerprint) of a user.

The electronic device 301 may include a connecting terminal 378 (e.g., the connecting terminal 178 of FIG. 1). The connecting terminal 378 may be disposed on the third surface 310C. For example, when the electronic device 301 is viewed in one direction (e.g., a -Y direction), the connecting terminal 378 may be positioned substantially in a central portion of the third surface 310C, and the sound output module 355 may be disposed on one side (e.g., the right side) with respect to the connecting terminal 378.

The electronic device 301 may include the first camera module 380A (e.g., the camera module 180 of FIG. 1 and/or the camera module 180 of FIG. 2). The first camera module 380A may be disposed on the first surface 310A. At least a portion of the first camera module 380A may be disposed under the display module 361. The first camera module 380A may receive an optical signal transmitted through the camera area 361A-2.

The electronic device 301 may include a plurality of second camera modules 380B (e.g., the camera module 180 of FIG. 1 and/or the camera module 180 of FIG. 2). The plurality of second camera modules 380B may be positioned on the second surface 310B. The plurality of second camera modules 380B may be arranged in a first row in one direction (e.g., a Y direction) of the second plate 311B. The plurality of second camera modules 380B may have different fields of view. For example, the plurality of second camera modules 380B may include an ultra-wide-angle camera, a wide-angle camera, and/or a tele-angle camera.

The electronic device 301 may include a light module 380C (e.g., the flash 220 of FIG. 2). The light module 380C may be arranged in a second row that is substantially parallel to the first row of the plurality of second camera modules 380B on the second surface 310B. The light module 380C may include one or more light-emitting diodes or xenon lamps. The light module 380C may include a sensor configured to detect external light. For example, the sensor may include a flicker sensor.

The electronic device 301 may include a third camera module 380D. The pixel, magnification, and/or field of view of the third camera module 380D may differ from the pixel, magnification, and/or field of view of at least one second camera module 380B. The third camera module 380D may be arranged in the second row that is substantially parallel to the first row of the plurality of second camera modules 380B on the second surface 310B.

The electronic device 301 may include a fourth camera module 380E. The fourth camera module 380E, which may also be referred to as a "depth camera" or a "time-of-flight (ToF) camera," may be configured to measure the distance between the fourth camera module 380E and an object. For example, the fourth camera module 380E may be configured to measure the distance using at least one or a combination of an ultrasonic wave, an infrared ray, or a laser. The fourth camera module 380E may be arranged in the second row that is substantially parallel to the first row of the plurality of second camera modules 380B on the second surface 310B.

The examples set forth herein may also apply to electronic devices of various shapes/forms (e.g., a foldable electronic device, a slidable electronic device, a rollable electronic device, a digital camera, a digital video camera, a tablet personal computer (PC), a laptop computer, and other electronic devices), in addition to the electronic device shown in FIGS. 3 and 4.

As used herein, the terms "substantially," "approximately," "generally," and "about" in reference to a given parameter, property, or condition may include a degree that one of ordinary skill in the art would understand that the given parameter, property, or condition is met with a small degree of variance, such as within acceptable manufacturing tolerances. For example, a parameter that is substantially met may be at least about 90% met, at least about 95% met, or at least about 99% met.

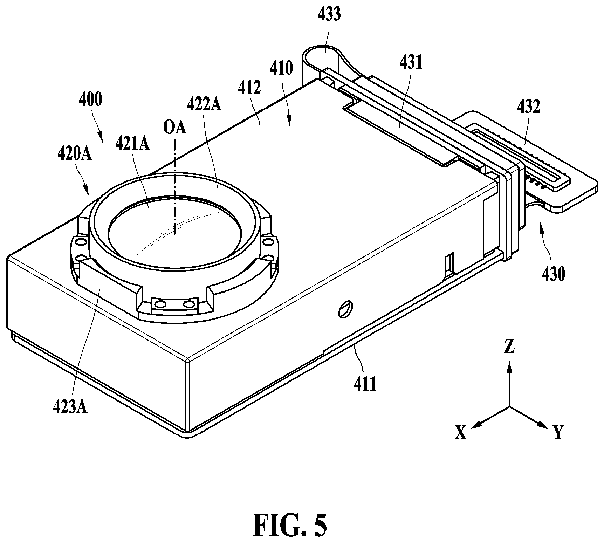

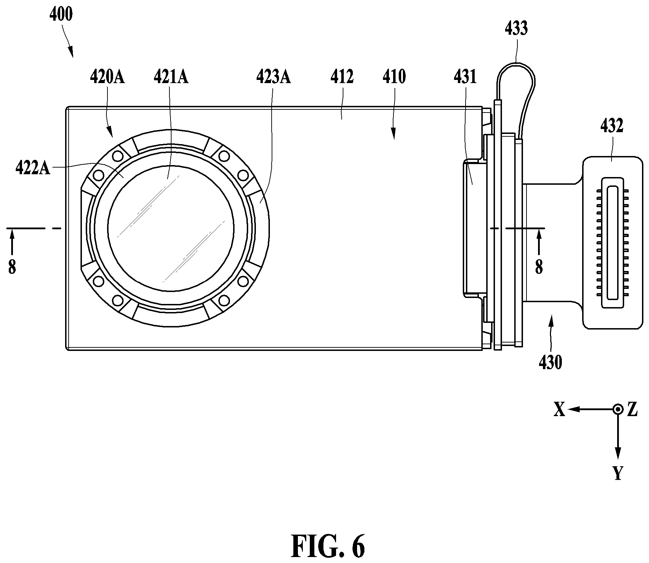

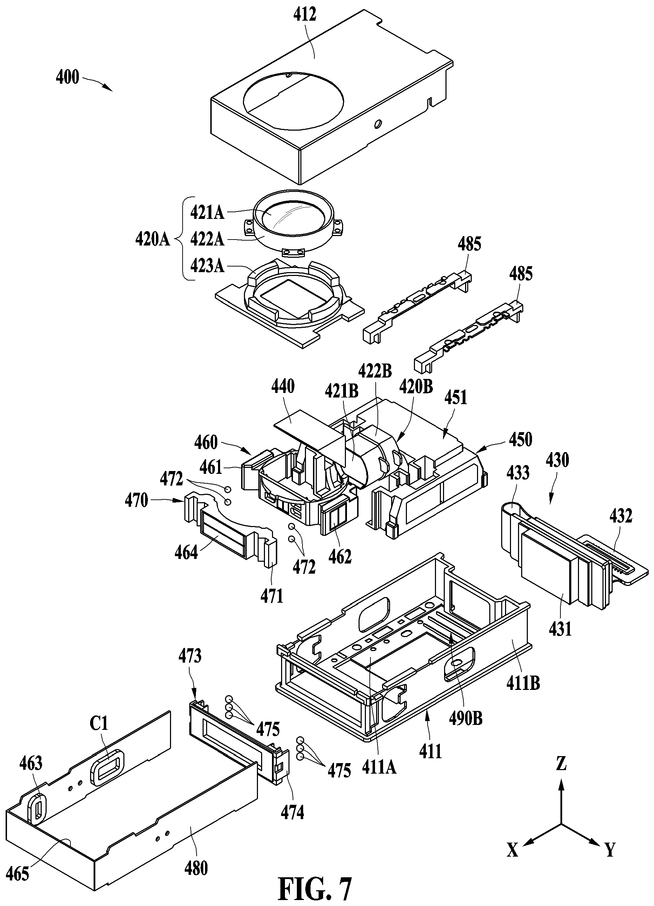

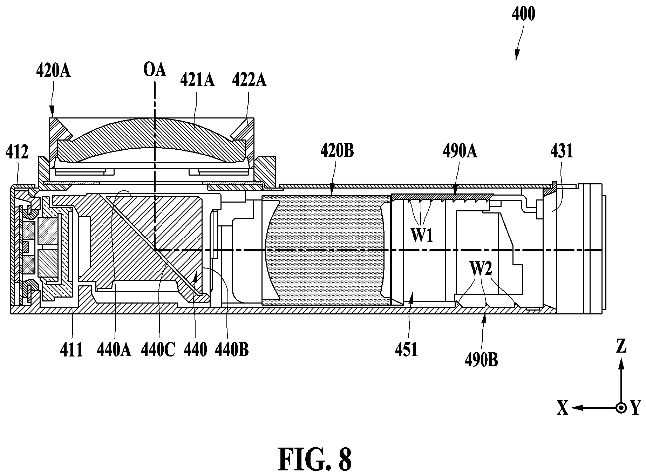

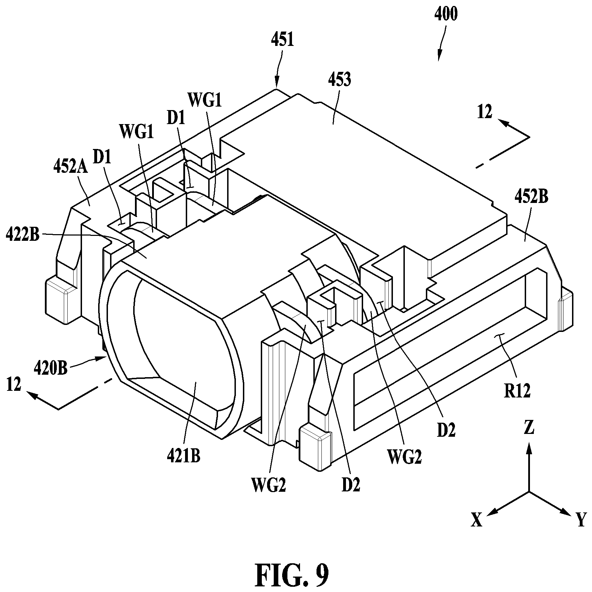

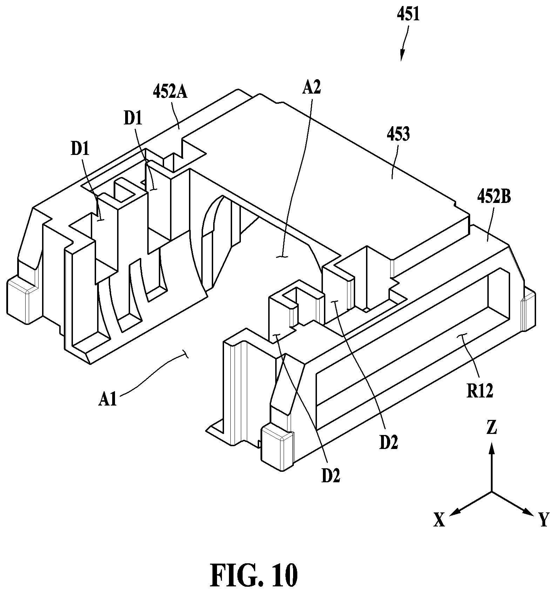

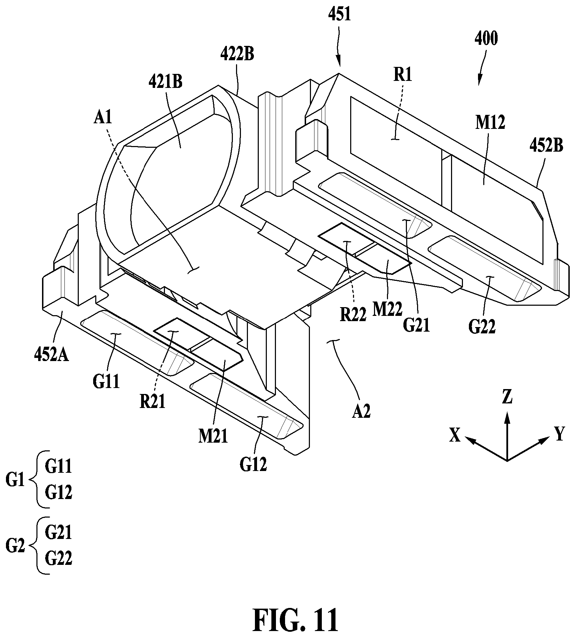

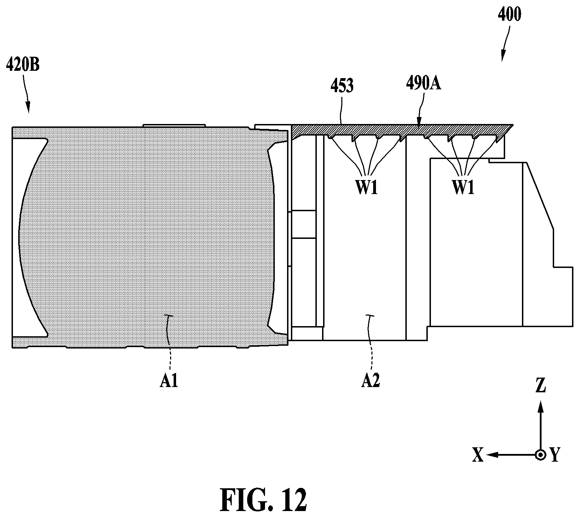

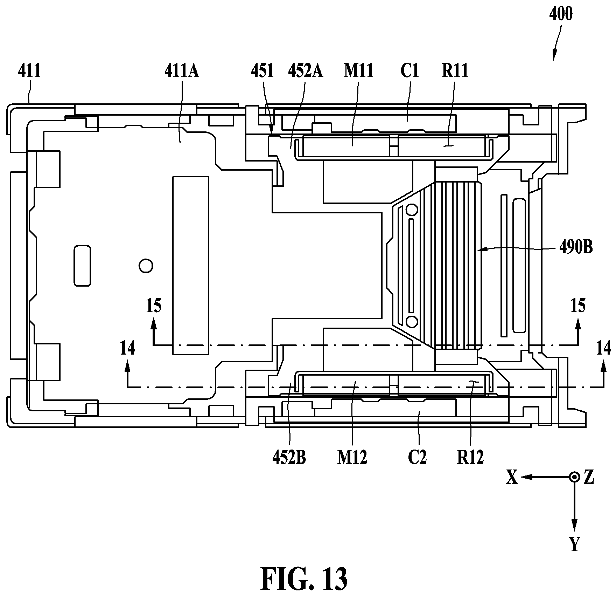

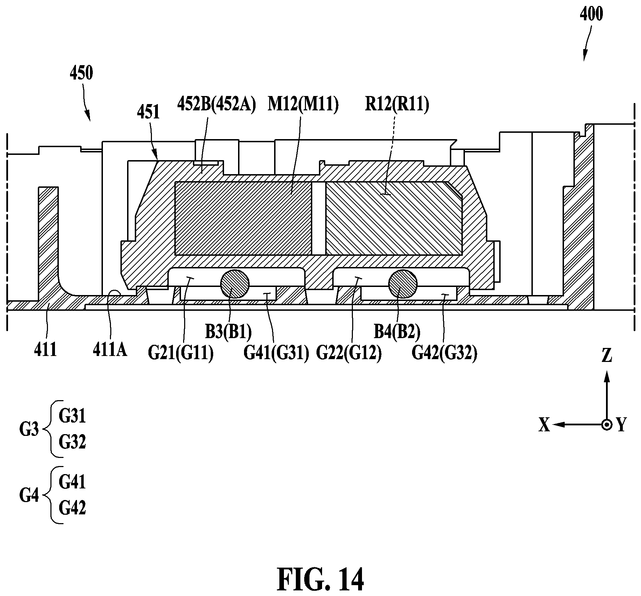

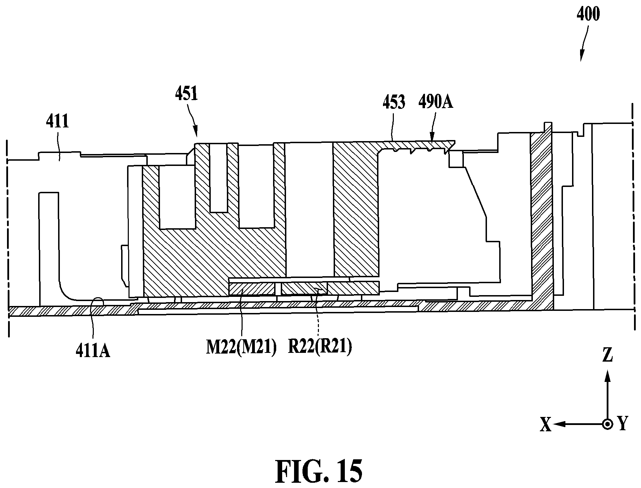

FIG. 5 is a perspective view of a camera module according to various embodiments. FIG. 6 is a diagram illustrating a plan view of the camera module according to various embodiments. FIG. 7 is an exploded perspective view of the camera module, according to various embodiments. FIG. 8 is a cross-sectional view taken along line 8-8 of the camera module of FIG. 6, according to various embodiments. FIG. 9 is a perspective view of a second lens assembly and a first carrier of the camera module, according to various embodiments. FIG. 10 is a perspective view of the first carrier of the camera module in one direction, according to various embodiments. FIG. 11 is a perspective view of a lens assembly and the first carrier of the camera module in another direction, according to various embodiments. FIG. 12 is a cross-sectional view taken along line 12-12 of the camera module of FIG. 9, according to various embodiments. FIG. 13 is a diagram illustrating a plan view of a portion of the camera module, according to various embodiments. FIG. 14 is a cross-sectional view taken along line 14-14 of the camera module of FIG. 13, according to various embodiments. FIG. 15 is a cross-sectional view taken along line 15-15 of the camera module of FIG. 13, according to various embodiments.

Referring to FIGS. 5 to 15, a camera module 400 (e.g., the camera module 180 of FIGS. 1 and 2, and/or the second camera module 380B and/or the third camera module 380D of FIG. 4) may include a camera housing 410. The camera housing 410 may be configured to house one or more camera-related components. The camera housing 410 may include a base 411 configured to support one or more camera-related components. The base 411 may include a base frame 411A and a plurality of side frames 411B connected to the base frame 411A. The base frame 411A may at least partially include a magnetic material. The camera housing 410 may include a camera cover 412. The camera cover 412, which may also be referred to as a "shield can," may be configured to cover one or more camera-related components housed in the camera housing 410.

The camera module 400 may include a first lens assembly 420A (e.g., the lens assembly 210 of FIG. 2). The first lens assembly 420A may include at least one first lens 421A having a defined optical axis OA. A portion of the optical axis OA may be defined as a line connecting the center of curvature of a first surface of at least one first lens 421A to the center of curvature of an N-th surface (N is a natural number). The first lens assembly 420A may include a first lens housing 422A configured to house at least one first lens 421A. The first lens assembly 420A may include a lens holder 423A configured to hold the first lens housing 422A. The lens holder 423A may be configured to support at least one first lens 421A. The lens holder 423A may be configured to be coupled to the camera housing 410. In an embodiment, the lens holder 423A may be detachably coupled to the first lens housing 422A. In an embodiment not shown, the lens holder 423A may be integrally formed with the first lens housing 422A. In an embodiment not shown, the camera module 400 may not include the first lens assembly 420A.

The camera module 400 may include a second lens assembly 420B (e.g., the lens assembly 210 of FIG. 2). The second lens assembly 420B may include at least one second lens 421B having the defined optical axis OA. A portion of the optical axis OA may be defined as a line connecting the center of curvature of a first surface of at least one second lens 421B to the center of curvature of an N-th surface (N is a natural number). The second lens assembly 420B may include a second lens housing 422B configured to house at least one second lens 421B.

The second lens assembly 420B may include a plurality of first wings WG1. The plurality of first wings WG1 may be disposed in a first portion (e.g., a side portion in a -Y direction) of the second lens housing 422B. The plurality of first wings WG1 may be arranged along the length (e.g., a dimension in an X-axis direction) of the second lens housing 422B. The second lens assembly 420B may include a plurality of second wings WG2. The plurality of second wings WG2 may be disposed in a second portion (e.g., a side portion in a +Y direction) that is opposite to the first portion of the second lens housing 422B. The plurality of second wings WG2 may be arranged along the length (e.g., a dimension in an X-axis direction) of the second lens housing 422B. The second lens housing 422B, the plurality of first wings WG1, and the plurality of second wings WG2 may be integrally formed as one component.

The camera module 400 may include a sensor assembly 430. The sensor assembly 430 may include an image sensor 431 (e.g., the image sensor 230 of FIG. 2) configured to convert an optical signal into an electrical signal. The sensor assembly 430 may include a connector 432 that is electrically connected to a processor (not shown) (e.g., the processor 120 of FIG. 1 and/or the ISP 260 of FIG. 2). The sensor assembly 430 may include a PCB 433 configured to transmit an electrical signal from the image sensor 431 to the connector 432. The PCB 433 may be electrically connected to the image sensor 431 and/or the connector 432. The PCB 433 may include a flexible PCB (FPCB).

The camera module 400 may include a reflector 440 configured to reflect light. The reflector 440 may include an incident surface 440A through which light is incident. For example, light passing through at least one first lens 421A may pass through the incident surface 440A. The reflector 440 may include an exit surface 440B through which light exits. For example, light passing through the exit surface 440B may be directed toward at least one second lens 421B. The reflector 440 may include at least one reflective surface 440C configured to reflect light passing through the incident surface 440A toward the exit surface 440B. The incident surface 440A, the exit surface 440B, and at least one reflective surface 440C may define an effective optical path of the reflector 440. In an embodiment not shown, the reflector 440 may include a mirror or prism having the reflective surface 440C.

The camera module 400 may include a first actuator 450. The first actuator 450, which may also be referred to as an "auto-focus (AF) actuator," may drive (e.g., move in an X-axis direction) the second lens assembly 420B along the optical axis OA. The first actuator 450 may include a first carrier 451 configured to carry the second lens housing 422B. The first carrier 451 may be sized and shaped to house the second lens housing 422B. The first carrier 451 may be disposed over the base frame 411A.

The first carrier 451 may include a first carrier part 452A forming a first side portion (e.g., a portion in a -Y direction) of the first carrier 451, a second carrier part 452B forming a second side portion (e.g., a portion in a +Y direction) that is opposite to the first side portion of the first carrier 451, and a bridge 453 connecting the first carrier part 452A to the second carrier part 452B. The first carrier part 452A, the second carrier part 452B, and the bridge 453 may be integrally formed as one component. The bridge 453 may at least partially include a metal material.

The first carrier 451 may include a first area A1 (e.g., a front area) in which the second lens assembly 420B is disposed and a second area A2 (e.g., a rear area) in which the second lens assembly 420B is not disposed. The first area A1 and the second area A2 may be defined between the first carrier part 452A and the second carrier part 452B along the length (e.g., a dimension in an X-axis direction) of the first carrier part 452A and the length (e.g., a dimension in an X-axis direction) of the second carrier part 452B.

A third portion (e.g., a portion in a +Z direction or a third side portion) between the first portion (e.g., a portion in a -Y direction or a first side portion) of the second lens assembly 420B and the second portion (e.g., a portion in a +Y direction or a second side portion) that is opposite to the first portion of the second lens assembly 420B may be opened in the first area A1. A fourth portion (e.g., a portion in a -Z direction or a fourth side portion), which is between the first portion and the second portion of the second lens assembly 420B and is opposite to the third portion, may be opened in the first area A1. The third portion and the fourth portion of the second lens assembly 420B may not be supported by any portion of the first carrier 451. No connecting structure connecting the first carrier part 452A to the second carrier part 452B may be disposed in the first area A1 that is substantially opened. This may reduce the size of the first carrier 451 and consequently reduce the height of the camera module 400. Furthermore, the second area A2 may be at least partially closed (e.g., closed in a +Z direction and opened in a -Z direction) by disposing the bridge 453 in the second area A2.

The first carrier 451 may include a plurality of first depressions D1. The plurality of first depressions D1 may provide support for the seating of the plurality of first wings WG1, respectively corresponding to each. The plurality of first depressions D1 may at least partially accommodate the plurality of first wings WG1, respectively corresponding to each. The plurality of first depressions D1 may be formed on an inner side surface (e.g., a side surface in a +Y direction) of the first carrier part 452A. The first carrier 451 may include a plurality of second depressions D2. The plurality of second depressions D2 may provide support for the seating of the plurality of second wings WG2, respectively corresponding to each. The plurality of second depressions D2 may at least partially accommodate the plurality of second wings WG2, respectively corresponding to each. The plurality of second depressions D2 may be formed on an inner side surface (e.g., a side surface in a -Y direction) of the second carrier part 452B.

The first carrier 451 may include a plurality of first recesses R11 and R12. Among the plurality of first recesses R11 and R12, one first recess R11 may be formed on an outer side surface (e.g., a side surface in a -Y direction) of the first carrier part 452A, and the other first recess R12 may be formed on an outer side surface (e.g., a side surface in a +Y direction) of the second carrier part 452B. The plurality of first recesses R11 and R12 may extend along the length (e.g., a dimension in an X-axis direction) of the first carrier part 452A and the length (e.g., a dimension in an X-axis direction) of the second carrier part 452B. The plurality of first recesses R11 and R12 may at least partially include a metal material.

The first carrier 451 may include a plurality of second recesses R21 and R22. Among the plurality of second recesses R21 and R22, one second recess R21 may be formed on a base surface (e.g., a surface in a -Z direction) of the first carrier part 452A, and the other second recess R22 may be formed on a base surface (e.g., a surface in a -Z direction) of the second carrier part 452B. The plurality of second recesses R21 and R22 may extend along the length (e.g., a dimension in an X-axis direction) and the length (e.g., a dimension in an X-axis direction) of the second carrier part 452B. The extension length of the plurality of second recesses R21 and R22 may be less than the extension length of the plurality of first recesses R11 and R12. The plurality of second recesses R21 and R22 may at least partially include a metal material.

The first carrier 451 may include a first guide G1 and a second guide G2. The first guide G1 and the second guide G2 may be configured to guide a movement along the optical axis OA of the first carrier 451. The first guide G1 may be disposed on the base surface (e.g., a surface in a -Z direction) of the first carrier part 452A, and the second guide G2 may be disposed on the base surface (e.g., a surface in a -Z direction) of the second carrier part 452B. The first guide G1 may extend along the length (e.g., a dimension in an X-axis direction) of the first carrier part 452A and include a first groove G11 and a second groove G12 that are separated from each other. In an embodiment not shown, the first guide G1 may include a single groove. The second guide G2 may extend along the length (e.g., a dimension in an X-axis direction) of the second carrier part 452B and include a third groove G21 and a fourth groove G22 that are separated from each other. In an embodiment not shown, the second guide G2 may include a single groove.

The first actuator 450 may include a plurality of first magnets M11 and M12. Among the plurality of first magnets M11 and M12, which may also each be referred to as an "electromagnetic element," one first magnet M11 may be disposed in the first recess R11 formed in the first carrier part 452A, and the other first magnet M12 may be disposed in the first recess R12 formed in the second carrier part 452B.

The first actuator 450 may include a plurality of first coils C1 and C2. Among the plurality of first coils C1 and C2, which may also each be referred to as an "electromagnetic element," one first coil C1 may be configured to be electromagnetically coupled to the first magnet M11 disposed in the first recess R11 of the first carrier part 452A, and the other first coil C2 may be configured to be electromagnetically coupled to the first magnet M12 disposed in the first recess R12 of the second carrier part 452B. The electromagnetic coupling between the plurality of first magnets M11 and M12 and the plurality of first coils C1 and C2 may cause the first carrier 451 to move along the optical axis OA. Among the plurality of first coils C1 and C2, one first coil C1 may be disposed on a PCB 480 and in one area (e.g., an area in a -Y direction) of the side frame 411B, and the other first coil C2 may be disposed on the PCB 480 and in an opposite area (e.g., an area in a +Y direction) of the side frame 411B.

The first actuator 450 may include a plurality of second magnets M21 and M22. The plurality of second magnets M21 and M22 may be configured to be magnetically coupled to a magnetic material that is included in the base frame 411A or disposed on the base frame 411A. The plurality of second magnets M21 and M22 may cause the first carrier 451 to move consistently along the optical axis OA through an attractive action with the magnetic material of the base frame 411A and may reduce or prevent the separation of the first carrier 451 from a predetermined path. Among the plurality of second magnets M21 and M22, one second magnet M21 may be disposed in the second recess R21 of the first carrier part 452A, and the other second magnet M22 may be disposed in the second recess R22 of the second carrier part 452B.

The first actuator 450 may include a plurality of guide balls B1, B2, B3, and B4. The plurality of guide balls B1, B2, B3, and B4 may be in cloud contact with the base frame 411A and the first carrier 451 and cause the first carrier 451 to move with respect to the base frame 411A. Among the plurality of guide balls B1, B2, B3, and B4, a first guide ball B1 may be disposed between the first groove G11 of the first carrier part 452A and a fifth groove G31 of the base frame 411A, a second guide ball B2 may be disposed between the second groove G12 of the first carrier part 452A and a sixth groove G32 of the base frame 411A, a third guide ball B3 may be disposed between the third groove G21 of the second carrier part 452B and a seventh groove G41 of the base frame 411A, and a fourth guide ball B4 may be disposed between the fourth groove G22 of the second carrier part 452B and an eighth groove G42 of the base frame 411A. The fifth groove G31 and the sixth groove G32 of the base frame 411A may be positioned adjacent to a first area (e.g., an area in a -Y direction) of the side frame 411B, extend along the length (e.g., a dimension in an X-axis direction) of the base frame 411A, and be separated from each other. The seventh groove G41 and the eighth groove G42 of the base frame 411A may be positioned adjacent to a second area (e.g., an area in a +Y direction) that is opposite to the first area of the side frame 411B, extend along the length of the base frame 411A, and be separated from each other.

The camera module 400 may include a second actuator 460. The second actuator 460, which may also be referred to as an "optical image stabilization (OIS) actuator," may cause the reflector 440 to rotate or tilt with respect to a pitch axis (e.g., a Y-axis) and/or a yaw axis (e.g., a Z-axis). The second actuator 460 may include a second carrier 461 configured to carry the reflector 440. The second carrier 461 may be sized and shaped to accommodate the reflector 440. The second carrier 461 may be disposed on the base frame 411A.

The second actuator 460 may include at least one third magnet 462, which may also be referred to as an "electromagnetic element." At least one third OIS magnet 462 may be disposed in a first area (e.g., a side area substantially in a +/-Y direction or a recess thereof) of the second carrier 461. The second actuator 460 may include at least one second coil 463, which may also be referred to as an "electromagnetic element." At least one second coil 463 (e.g., the second coil 463 disposed in a +Y direction) may be configured to be electromagnetically coupled to at least one third magnet 462 (e.g., the third magnet 462 disposed in a -Y direction). At least one second coil 463 may be spaced apart from at least one first coil C1 or C2 in one direction (e.g., an X-axis direction) so as not to overlap the plurality of first magnets M11 and M12 and may be disposed in one area (e.g., an area in a +/-Y direction) of the side frame 411B. At least one second coil 463 may be spaced apart from at least one first coil C1 or C2 in one direction (e.g., an X-axis direction) and may be disposed in one area (e.g., an area in a +/-Y direction) of the PCB 480. The electromagnetic coupling between the third magnet 462 and the second coil 463 may implement rotation of the second carrier 461 with respect to the pitch axis (e.g., a Y-axis).

The second actuator 460 may include at least one fourth magnet 464, which may also be referred to as an "electromagnetic element." The second actuator 460 may include at least one third OIS coil 465, which may also be referred to as an "electromagnetic element." At least one third OIS coil 465 may be configured to be electromagnetically coupled to at least one fourth magnet 464. At least one third OIS coil 465 may be disposed in one area (e.g., an area in an +X direction) of the side frame 411B. At least one third OIS coil 465 may be spaced apart from at least one first coil C1 or C2 in one direction (e.g., an X-axis direction) and may be disposed in one area (e.g., an area in an +X direction) of the PCB 480.

The camera module 400 may include a third guide 470. The third guide 470 may include a first guide body 471 and at least one fifth guide ball 472. The first guide body 471 may include at least one first inner groove (e.g., a groove formed on a surface in an -X direction) configured to at least partially accommodate at least one fifth guide ball 472. For example, the first inner groove may extend along an inner surface of the first guide body 471 in a rotational direction with respect to a Z-axis. The second carrier 461 may include at least one outer groove (e.g., a groove formed on a surface in an +X direction) configured to at least partially accommodate at least one fifth guide ball 472. At least one outer groove of the second carrier 461 may extend along an outer surface of the second carrier 461 in a rotational direction with respect to a Z-axis. The second carrier 461 may be in cloud contact with at least one fifth guide ball 472 and configured to rotate with respect to the Z-axis by the first guide body 471.

The camera module 400 may include a fourth guide 473. The fourth guide 473 may include a second guide body 474 and at least one sixth guide ball 475. The first guide body 471 may include at least one first outer groove (e.g., a groove formed on a surface in an +X direction) configured to accommodate at least one sixth guide ball 475, and the second guide body 474 may include at least one second inner groove (e.g., a groove formed on a surface in an -X direction) configured to accommodate at least one sixth guide ball 475. For example, at least one first outer groove may extend along an outer surface of the first guide body 471 in a rotational direction with respect to a Y-axis, and at least one second inner groove may extend along an inner surface of the second guide body 474 in a rotational direction with respect to a Y-axis. The first guide body 471 may be disposed between the second carrier 461 and the second guide body 474, and the second guide body 474 may be disposed in one area (e.g., an area in an +X direction) of the side frame 411B. The first guide body 471 may be in cloud contact with at least one sixth guide ball 475 and configured to rotate with respect to the Y-axis. The second guide body 474 may be fixed to the side frame 411B.

The camera module 400 may include the PCB 480. The PCB 480 may provide an electrical connection of at least one first coil C1 or C2, at least one second coil 463, and at least one third coil 465. These coils may be disposed on the PCB 480. The PCB 480 may include an FPCB. The PCB 480 may surround the side frames 411B.

The camera module 400 may include at least one stopper 485. The stopper 485 may reduce or prevent the second lens assembly 420B from moving beyond a predetermined movement range in a Z-axis direction due to an external impact. The stopper 485 may be disposed between the camera cover 412 and the second lens housing 422B.

The camera module 400 may include a first baffle 490A. The first baffle 490A, which may also be referred to as a "light-blocking member," may be configured to control the flow of light. The first baffle 490A may reduce or suppress the disturbance of an optical system caused by stray light from the camera module 400. The first baffle 490A may include a plurality of first walls W1. The plurality of first walls W1 may be arranged between one edge (e.g., an edge proximal to the second lens 421B) of the bridge 453 and an opposite edge (e.g., an edge distal to the second lens 421B) on one surface (e.g., a surface in a -Z direction) of the bridge 453 facing the optical axis OA.

The camera module 400 may include a second baffle 490B. The second baffle 490B, which may also be referred to as a "light-blocking member," may be configured to control the flow of light. The second baffle 490B may reduce or suppress the disturbance of an optical system caused by stray light from the camera module 400. The second baffle 490B may include a plurality of second walls W2. The plurality of second walls W2 may be arranged on the base frame 411A between the second lens 421B and the image sensor 431. The second baffle 490B may be integrally and seamlessly formed with the base frame 411A. For example, the second baffle 490B and the base frame 411A may be manufactured as one component by insert injection molding.

The first baffle 490A and the second baffle 490B may be disposed between the second lens 421B and the image sensor 431. A flare phenomenon that may be caused by stray light between the image sensor 431 disposed in the camera housing 410 at a fixed position and the second lens 421B moving in a predetermined direction (e.g., an X-axis direction) with respect to the camera housing 410 may be suppressed.

The first baffle 490A and the second baffle 490B may be disposed substantially parallel to each other. The first baffle 490A and the second baffle 490B may be disposed opposite to each other with respect to the optical axis OA. For example, the first baffle 490A may be positioned on a first side (e.g., a side in a +Z direction) with respect to the second lens 421B, and the second baffle 490B may be positioned on a second side (e.g., a side in a -Z direction) that is opposite to the first side with respect to the second lens 421B. The first baffle 490A may be oriented in a first direction (e.g., a -Z direction), and the second baffle 490B may be oriented in a second direction (e.g., a +Z direction) that is opposite to the first direction. The disposition of the first baffle 490A and the second baffle 490B may effectively prevent a flare phenomenon by substantially suppressing stray light in both directions.

The first baffle 490A and the second baffle 490B may at least partially overlap each other. For example, the first baffle 490A and the second baffle 490B may have an overlapping area when viewed in a direction (e.g., a Z-axis direction) that is substantially orthogonal to the optical axis OA. The size of the overlapping area between the first baffle 490A and the second baffle 490B may vary depending on the movement of the first carrier 451 in a stroke direction (e.g., an X-axis direction). The size of the overlapping area between the first baffle 490A and the second baffle 490B at a predetermined stroke position of the first carrier 451 may be substantially close to 0, or no overlap may occur between the first baffle 490A and the second baffle 490B. The overlapping structure of the first baffle 490A and the second baffle 490B may reduce or suppress flare that may occur on both sides (e.g., a first side (or a side in a +Z direction) and a second side (or a side in a -Z direction)) with respect to the image sensor 431.

The size of at least one first wall W1 among the plurality of first walls W1 may be smaller than the size of at least one second wall W2 among the plurality of second walls W2. For example, the height of the first wall W1 with respect to one surface (e.g., a surface in a -Z-direction) of a base 491A may be less than the height of the second wall W2 with respect to one surface (e.g., a surface in a +Z direction) of the base frame 411A. The surface area of the first baffle 490A may be smaller than the surface area of the second baffle 490B. By maximally using an available space between the second lens 421B and the image sensor 431, a flare phenomenon that may be caused by stray light therebetween may be effectively suppressed. The angle of each inclined surface of the plurality of first walls W1 may be substantially the same as the angle of each inclined surface of the plurality of second walls W2. The angle of at least some of the inclined surfaces of the plurality of first walls W1 may be different (e.g., less or greater) from the angle of at least some of the inclined surfaces of the plurality of second walls W2. The size of at least one first wall W1 may be smaller than the size of at least one second wall W2. A first distance between adjacent first walls W1 among the plurality of first walls W1 may be less than a second distance between adjacent second walls W2 among the plurality of second walls W2.

In an embodiment not shown, at least one first wall W1 and/or at least one second wall W2 may have a substantially trapezoidal cross-section. This may allow molded resin to be smoothly extracted from a mold without substantial damage to the first wall W1 and the second wall W2 during manufacturing (e.g., injection molding) of the first baffle 490A and the second baffle 490B.

In an embodiment not shown, the camera module 400 may include a plurality of first baffles 490A. In an embodiment not shown, the camera module 400 may include a plurality of second baffles 490B. In an embodiment not shown, the camera module 400 may include one or more baffles disposed between the first lens assembly 420A and the second lens assembly 420B.

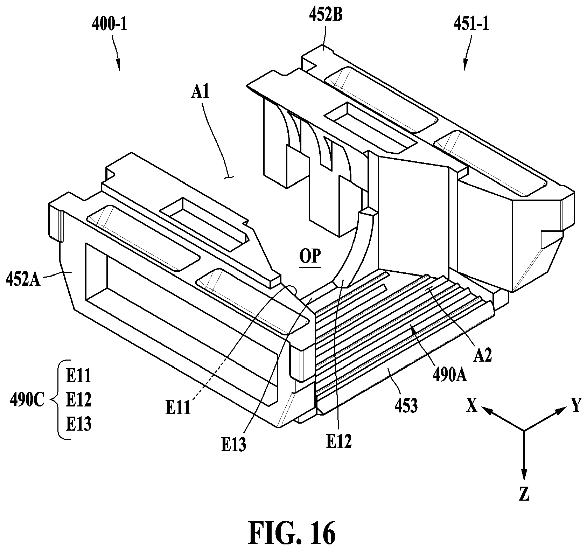

FIG. 16 is a perspective view of a carrier of a camera module, according to various embodiments.

Referring to FIG. 16, a camera module 400-1 (e.g., the camera module 180 of FIGS. 1 and 2, the second camera module 380B and/or the third camera module 380D of FIG. 4, and/or the camera module 400 of FIGS. 5 to 15) may include a carrier 451-1 (e.g., the first carrier 451 of FIGS. 5 to 15). The carrier 451-1 may include the first carrier part 452A, the second carrier part 452B, and the bridge 453. The carrier 451-1 may include the first area A1 and the second area A2. The carrier 451-1 may include the first baffle 490A.

The carrier 451-1 may include a second baffle 490C. The second baffle 490C may include a first extension E11 extending along a portion (e.g., a half portion) of an inner perimeter of the first carrier part 452A, a second extension E12 extending along a portion (e.g., a half portion) of an inner perimeter of the second carrier part 452B, and a third extension E13 extending between the first extension E11 and the second extension E12. The first extension E11, the second extension E12, and the third extension E13 may define a portion of an opening OP (e.g., a half portion of the perimeter of the opening OP) aligned with a lens (e.g., the second lens 421B of FIGS. 5 to 15) of a lens assembly (e.g., the second lens assembly 420B of FIGS. 5 to 15) disposed in the first area A1. This may not substantially cause an undercut by considering a direction (e.g., a +/-Z direction) in which one or more molds are removed to manufacture the carrier 451-1. The second baffle 490C may be positioned in the second area A2. The second baffle 490C may be disposed between the lens assembly (e.g., the second lens assembly 420B of FIGS. 5 to 15) disposed in the first area A1 and the bridge 453. The second baffle 490C may be integrally formed with the first carrier part 452A, the second carrier part 452B, and the bridge 453.

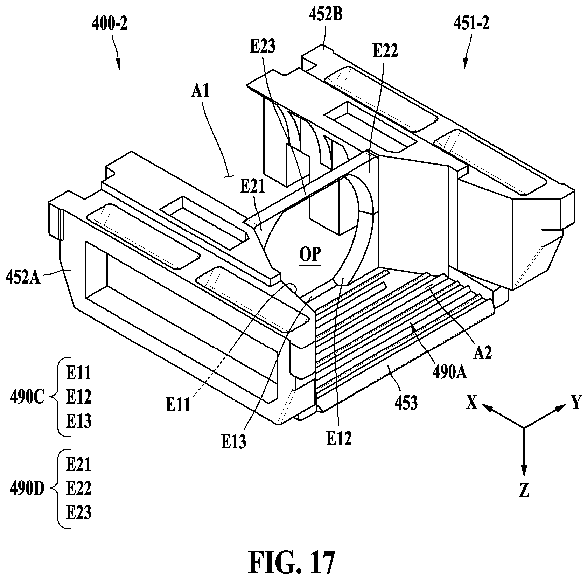

FIG. 17 is a perspective view of a carrier of a camera module, according to various embodiments.

Referring to FIG. 17, a camera module 400-2 (e.g., the camera module 180 of FIGS. 1 and 2, the second camera module 380B and/or the third camera module 380D of FIG. 4, the camera module 400 of FIGS. 5 to 15, and/or the camera module 400-1 of FIG. 16) may include a carrier 451-2 (e.g., the first carrier 451 of FIGS. 5 to 15 and/or the carrier 451-1 of FIG. 16). The carrier 451-2 may include the first carrier part 452A, the second carrier part 452B, and the bridge 453. The carrier 451-2 may include the first area A1 and the second area A2. The carrier 451-2 may include the first baffle 490A. The carrier 451-2 may include the second baffle 490C. The second baffle 490C may include the first extension E11, the second extension E12, and the third extension E13. The first extension E11, the second extension E12, and the third extension E13 may define a portion of the opening OP (e.g., a half portion of the perimeter of the opening OP).

The carrier 451-2 may include a third baffle 490D. The third baffle 490D may include a fourth extension E21 extending along a remaining portion (e.g., a half portion) of the inner perimeter of the first carrier part 452A, a fifth extension E22 extending along a remaining portion (e.g., a half portion) of the inner perimeter of the second carrier part 452B, and a sixth extension E23 extending between the fourth extension E21 and the fifth extension E22. The fourth extension E21, the fifth extension E22, and the sixth extension E23 may define a remaining portion of the opening OP (e.g., a remaining half portion of the perimeter of the opening OP). The third baffle 490D may be positioned in the second area A2. The third baffle 490D may be disposed between a lens assembly (e.g., the second lens assembly 420B of FIGS. 5 to 15) in which the second baffle 490C is disposed in the first area A1 and the bridge 453.

The third baffle 490D may be coupled to the second baffle 490C as a separate component from the first carrier part 452A, the second carrier part 452B, and the bridge 453. For example, the fourth extension E21 may be disposed on an inner side surface (e.g., a surface in a +Y direction) of the first carrier part 452A, the fifth extension E22 may be disposed on an inner side surface (e.g., a surface in a -Y direction) of the second carrier part 452B, and the sixth extension E23 may be disposed to be opposite to the third extension E13 with respect to the opening OP. The second baffle 490C and the third baffle 490D may define the opening OP having a substantially complete shape and may block more stray light that may cause a flare phenomenon.

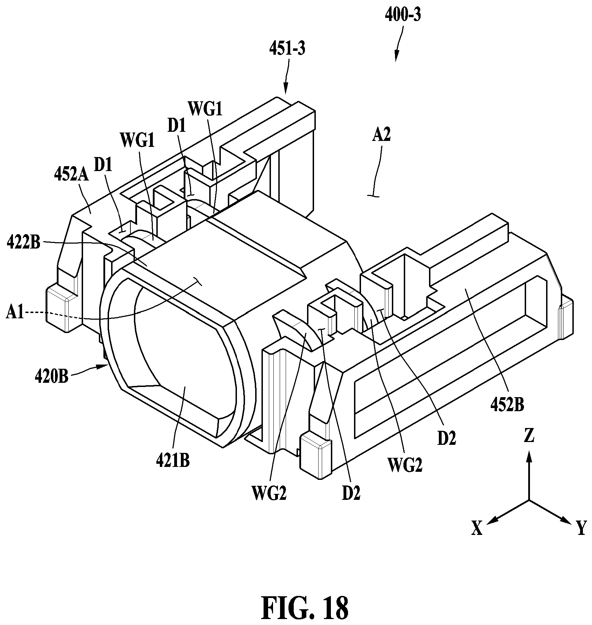

FIG. 18 is a perspective view of a lens assembly and a carrier of a camera module, according to various embodiments.

Referring to FIG. 18, a camera module 400-3 (e.g., the camera module 180 of FIGS. 1 and 2, the second camera module 380B and/or the third camera module 380D of FIG. 4, the camera module 400 of FIGS. 5 to 15, the camera module 400-1 of FIG. 16, and/or the camera module 400-2 of FIG. 17) may include the lens assembly 420B (e.g., the second lens assembly 420B of FIGS. 5 to 15) and a carrier 451-3 (e.g., the first carrier 451 of FIGS. 5 to 15, the carrier 451-1 of FIG. 16, and/or the carrier 451-2 of FIG. 17). The lens assembly 420B may include the lens 421B, the lens housing 422B, the plurality of first wings WG1, and the plurality of second wings WG2. The carrier 451-3 may include the first carrier part 452A and the second carrier part 452B. The first carrier part 452A may include the plurality of first depressions D1. The second carrier part 452B may include the plurality of second depressions D2. The carrier 451-3 may include the first area A1 and the second area A2.

The first carrier part 452A and the second carrier part 452B may be coupled to the lens housing 422B as separate components and form the carrier 451-3. The carrier 451-3 may not include any connecting structure (e.g., the bridge 453 of FIGS. 5 to 15) connecting the first carrier part 452A to the second carrier part 452B.

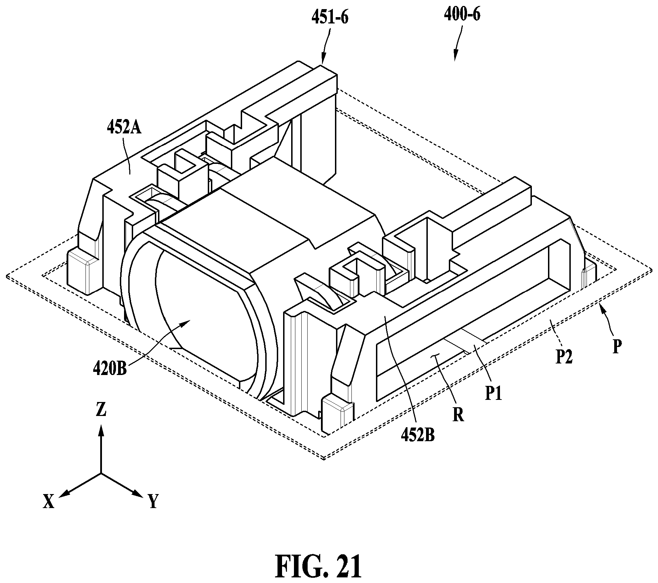

The first carrier part 452A and the second carrier part 452B may be disposed substantially parallel to each other. Since the first carrier part 452A and the second carrier part 452B include a structure (e.g., the first guide G1 and the second guide G2 of FIGS. 5 to 15) to guide the carrier 451-3 in an optical axis direction (e.g., an X-axis direction), when the lens housing 422B is coupled to the first carrier part 452A and the second carrier part 452B, precise alignment of the first carrier part 452A and the second carrier part 452B may be required. For example, aligning the first carrier part 452A and the second carrier part 452B may be achieved by coupling the lens housing 422B to the first carrier part 452A and the second carrier part 452B in a state in which the first carrier part 452A and the second carrier part 452B are seated on an alignment bridge (e.g., an alignment bridge P of FIG. 21) or by coupling the lens housing 422B to the first carrier part 452A and the second carrier part 452B in a state in which each of the positions of the first carrier part 452A and the second carrier part 452B is adjusted using an optical alignment device.

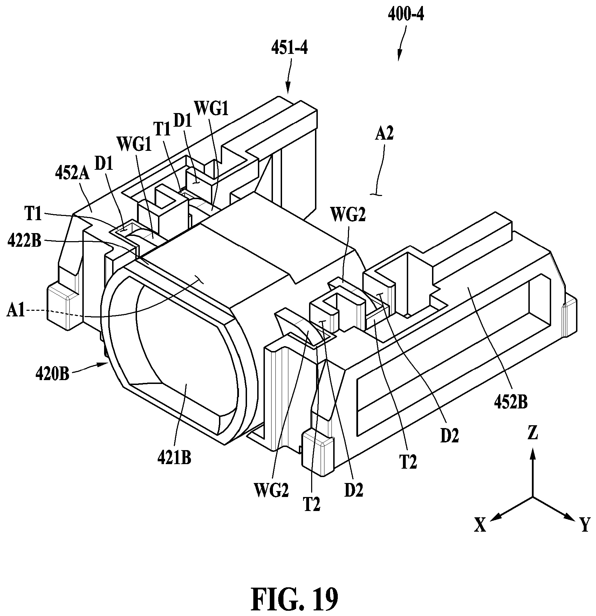

FIG. 19 is a perspective view of a lens assembly and a carrier of a camera module, according to various embodiments.

Referring to FIG. 19, a camera module 400-4 (e.g., the camera module 180 of FIGS. 1 and 2, the second camera module 380B and/or the third camera module 380D of FIG. 4, the camera module 400 of FIGS. 5 to 15, the camera module 400-1 of FIG. 16, the camera module 400-2 of FIG. 17, and/or the camera module 400-3 of FIG. 18) may include the lens assembly 420B (e.g., the second lens assembly 420B of FIGS. 5 to 15) and a carrier 451-4 (e.g., the first carrier 451 of FIGS. 5 to 15, the carrier 451-1 of FIG. 16, the carrier 451-2 of FIG. 17, and/or the carrier 451-3 of FIG. 18). The lens assembly 420B may include the lens 421B, the lens housing 422B, the plurality of first wings WG1, and the plurality of second wings WG2. The carrier 451-4 may include the first carrier part 452A and the second carrier part 452B. The first carrier part 452A may include the plurality of first depressions D1. The second carrier part 452B may include the plurality of second depressions D2. The carrier 451-4 may include the first area A1 and the second area A2.

The plurality of first depressions D1 may include a metal material. For example, the first depression D1 may include a first metal component T1 disposed on a surface (e.g., a side surface) facing the first wing WG1 among the surfaces defining the first depression D1. The plurality of second depressions D2 may include a metal material. For example, the second depression D2 may include a second metal component T2 disposed on a surface (e.g., a side surface) facing the second wing WG2 among the surfaces defining the second depression D2.

The first metal component T1 and the second metal component T2 may provide improved coupling force between the lens housing 422B including a first material (e.g., liquid crystal polymer (LCP) resin) having relatively low coupling force and the first carrier part 452A and the second carrier part 452B each including a second material (e.g., polycarbonate (PC)). In addition, since the first metal component T1 and the second metal component T2 have reflective characteristics of metal surfaces, the process may be simplified by applying bonding using a photo-curing method without an additional process (e.g., a thermal-curing process).

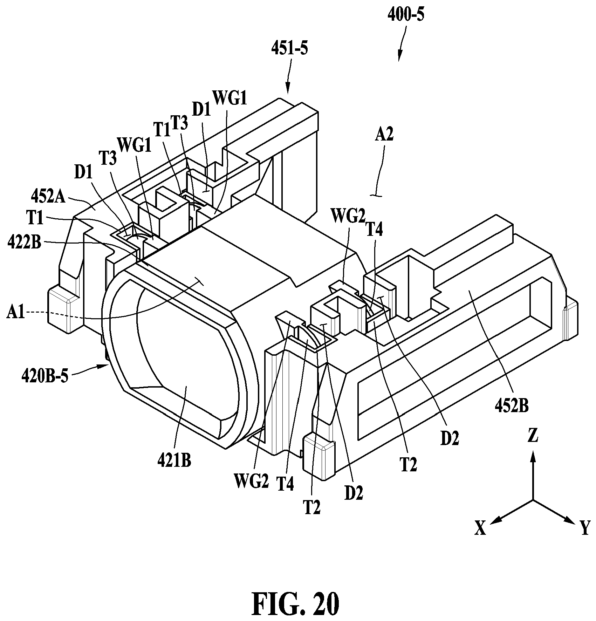

FIG. 20 is a perspective view of a lens assembly and a carrier of a camera module, according to various embodiments.

Referring to FIG. 20, a camera module 400-5 (e.g., the camera module 180 of FIGS. 1 and 2, the second camera module 380B and/or the third camera module 380D of FIG. 4, the camera module 400 of FIGS. 5 to 15, the camera module 400-1 of FIG. 16, the camera module 400-2 of FIG. 17, the camera module 400-3 of FIG. 18, and/or the camera module 400-4 of FIG. 19) may include a lens assembly 420B-5 (e.g., the second lens assembly 420B of FIGS. 5 to 15) and a carrier 451-5 (e.g., the first carrier 451 of FIGS. 5 to 15, the carrier 451-1 of FIG. 16, the carrier 451-2 of FIG. 17, the carrier 451-3 of FIG. 18, and/or the carrier 451-4 of FIG. 19).

The lens assembly 420B-5 may include the lens 421B, the lens housing 422B, the plurality of first wings WG1, and the plurality of second wings WG2.

The carrier 451-5 may include the first carrier part 452A and the second carrier part 452B. The first carrier part 452A may include the plurality of first depressions D1. The second carrier part 452B may include the plurality of second depressions D2. The carrier 451-5 may include the first area A1 and the second area A2. The carrier 451-5 may include the first metal component T1 and the second metal component T2.

The plurality of first wings WG1 may include a metal material. For example, the first wing WG1 may include a third metal component T3 extending from an end portion of the first wing WG1 in a span direction (e.g., a -Y direction) of the first wing WG1. The plurality of second wings WG2 may include a metal material. For example, the second wing WG2 may include a fourth metal component T4 extending from an end portion of the second wing WG2 in a span direction (e.g., a +Y direction) of the second wing WG2.

The third metal component T3 may be configured to be coupled to the first metal component T1, and the fourth metal component T4 may be configured to be coupled to the second metal component T2. The mutual coupling between the metal components may be performed by bonding, soldering, or welding. A mutual coupling portion between the first carrier part 452A and the lens housing 422B and a mutual coupling portion between the second carrier part 452B and the lens housing 422B include a metal material, which may enable the bonding application using a photo-curing method due to the reflective characteristics of the metal surfaces of the metal components, may not require an additional process (e.g., a process using a thermal-curing method), and may increase the coupling force between the components.

An intermediate coupling metal component (not shown) may be interposed between the first metal component T1 and the third metal component T3 and between the second metal component T2 and the fourth metal component T4. The intermediate coupling metal component may increase the mutual coupling speed between the first carrier part 452A and the lens housing 422B and between the second carrier part 452B and the lens housing 422B, thereby increasing the coupling strength therebetween.

A coupling surface of the first metal component T1, a coupling surface of the second metal component T2, a coupling surface of the third metal component T3, and a coupling surface of the fourth metal component T4 may be at least partially melted by a melting device (e.g., a laser device) and then cooled to induce mutual coupling of the components. This may increase the coupling hardness between the components.

FIG. 21 is a perspective view of a lens assembly and a carrier of a camera module, according to various embodiments.

Referring to FIG. 21, a camera module 400-6 (e.g., the camera module 180 of FIGS. 1 and 2, the second camera module 380B and/or the third camera module 380D of FIG. 4, the camera module 400 of FIGS. 5 to 15, the camera module 400-1 of FIG. 16, the camera module 400-2 of FIG. 17, the camera module 400-3 of FIG. 18, the camera module 400-4 of FIG. 19, and/or the camera module 400-5 of FIG. 20) may include the lens assembly 420B (e.g., the second lens assembly 420B of FIGS. 5 to 15 and/or the lens assembly 420B-5 of FIG. 20) and a carrier 451-6 (e.g., the first carrier 451 of FIGS. 5 to 15, the carrier 451-1 of FIG. 16, the carrier 451-2 of FIG. 17, the carrier 451-3 of FIG. 18, the carrier 451-4 of FIG. 19, and/or the carrier 451-5 of FIG. 20). The carrier 451-6 may include the first carrier part 452A and the second carrier part 452B. The first carrier part 452A and the second carrier part 452B may each include a recess R (e.g., the plurality of first recesses R11 and R12 of FIGS. 5 to 15).

In a state in which the first carrier part 452A and the second carrier part 452B are aligned through the alignment bridge P formed of a metal material surrounding the first carrier part 452A and the second carrier part 452B and the lens assembly 420B is coupled, a perimeter portion P2 of the alignment bridge P, which is not required for the carrier 451-6, may be removed. For example, removal of the perimeter portion P2 may be performed by a laser-cutting method. A remaining cutting portion P1, except for the removed perimeter portion P2 of the alignment bridge P, may be disposed in each recess R.

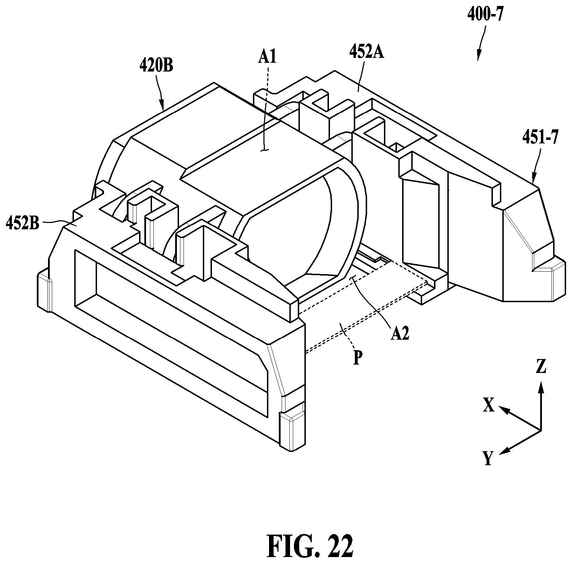

FIG. 22 is a perspective view of a lens assembly and a carrier of a camera module, according to various embodiments.

Referring to FIG. 22, a camera module 400-7 (e.g., the camera module 180 of FIGS. 1 and 2, the second camera module 380B and/or the third camera module 380D of FIG. 4, the camera module 400 of FIGS. 5 to 15, the camera module 400-1 of FIG. 16, the camera module 400-2 of FIG. 17, the camera module 400-3 of FIG. 18, the camera module 400-4 of FIG. 19, the camera module 400-5 of FIG. 20, and/or the camera module 400-6 of FIG. 21) may include the lens assembly 420B (e.g., the second lens assembly 420B of FIGS. 5 to 15 and/or the lens assembly 420B-5 of FIG. 20) and a carrier 451-7 (e.g., the first carrier 451 of FIGS. 5 to 15, the carrier 451-1 of FIG. 16, the carrier 451-2 of FIG. 17, the carrier 451-3 of FIG. 18, the carrier 451-4 of FIG. 19, the carrier 451-5 of FIG. 20, and/or the carrier 451-6 of FIG. 21). The carrier 451-7 may include the first carrier part 452A and the second carrier part 452B. The carrier 451-7 may include the first area A1 and the second area A2.

The first carrier part 452A and the second carrier part 452B may be aligned by the alignment bridge P formed of a metal material, which is disposed in the second area A2 and connects the first carrier part 452A to the second carrier part 452B. The lens assembly 420B may be coupled to the first carrier part 452A and the second carrier part 452B after the first carrier part 452A and the second carrier part 452B are aligned. After the lens assembly 420B is coupled to the first carrier part 452A and the second carrier part 452B, a portion of the alignment bridge P, which is not required for the carrier 451-7, may be removed. A portion of the alignment bridge P, which is not removed and remains in the carrier 451-7, may be concealed by a concealing member (not shown) to block stray light that causes flare.

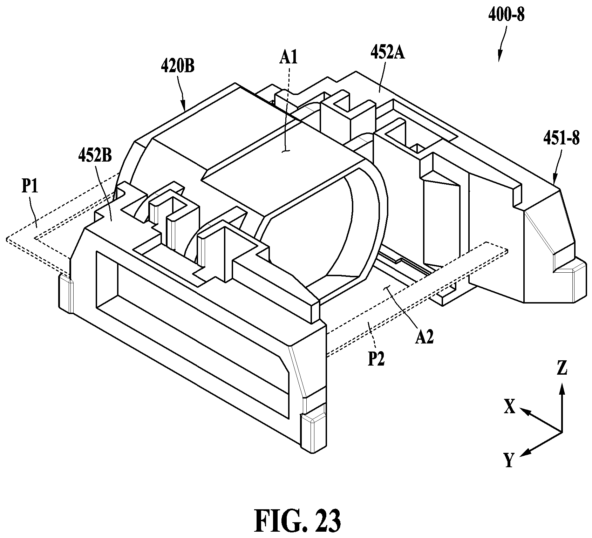

FIG. 23 is a perspective view of a lens assembly and a carrier of a camera module, according to various embodiments.

Referring to FIG. 23, a camera module 400-8 (e.g., the camera module 180 of FIGS. 1 and 2, the second camera module 380B and/or the third camera module 380D of FIG. 4, the camera module 400 of FIGS. 5 to 15, the camera module 400-1 of FIG. 16, the camera module 400-2 of FIG. 17, the camera module 400-3 of FIG. 18, the camera module 400-4 of FIG. 19, the camera module 400-5 of FIG. 20, the camera module 400-6 of FIG. 21, and/or the camera module 400-7 of FIG. 22) may include the lens assembly 420B (e.g., the second lens assembly 420B of FIGS. 5 to 15 and/or the lens assembly 420B-5 of FIG. 20) and a carrier 451-8 (e.g., the first carrier 451-1 of FIG. 5 to 15, the carrier 451-1 of FIG. 16, the carrier 451-2 of FIG. 17, the carrier 451-3 of FIG. 18, the carrier 451-4 of FIG. 19, the carrier 451-5 of FIG. 20, the carrier 451-6 of FIG. 21, and/or the carrier 451-7 of FIG. 22). The carrier 451-8 may include the first carrier part 452A and the second carrier part 452B. The carrier 451-8 may include the first area A1 and the second area A2.

The first carrier part 452A and the second carrier part 452B may be aligned by the alignment bridge P formed of a plastic material, which connects the first carrier part 452A to the second carrier part 452B. The alignment bridge P may include a first connecting portion P1, which is connected to a front surface (e.g., a surface in an +X direction) of the first carrier part 452A and a front surface (e.g., a surface in an +X direction) of the second carrier part 452B, is positioned in the first area A1, and extends between the first carrier part 452A and the second carrier part 452B, and a second connecting portion P2, which is positioned in the second area A2 and is connected to an inner side surface (e.g., a surface in a +Y direction) of the first carrier part 452A and an inner side surface (e.g., a surface in a -Y direction) of the second carrier part 452B. The lens assembly 420B may be coupled to the first carrier part 452A and the second carrier part 452B after the first carrier part 452A and the second carrier part 452B are aligned. After the lens assembly 420B is coupled to the first carrier part 452A and the second carrier part 452B, the first connecting portion P1 and the second connecting portion P2 of the alignment bridge P, which are not required for the carrier 451-8, may be removed.

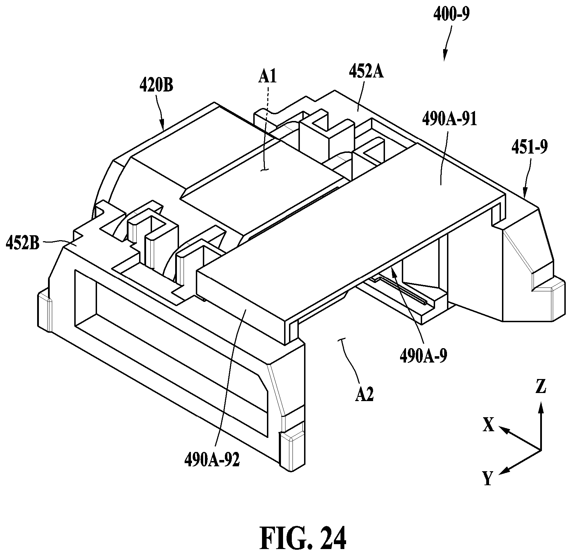

FIG. 24 is a perspective view of a lens assembly and a carrier of a camera module, according to various embodiments.

Referring to FIG. 24, a camera module 400-9 (e.g., the camera module 180 of FIGS. 1 and 2, the second camera module 380B and/or the third camera module 380D of FIG. 4, the camera module 400 of FIGS. 5 to 15, the camera module 400-1 of FIG. 16, the camera module 400-2 of FIG. 17, the camera module 400-3 of FIG. 18, the camera module 400-4 of FIG. 19, the camera module 400-5 of FIG. 20, the camera module 400-6 of FIG. 21, the camera module 400-7 of FIG. 22, and/or the camera module 400-8 of FIG. 23) may include the lens assembly 420B (e.g., the second lens assembly 420B of FIGS. 5 to 15 and/or the lens assembly 420B-5 of FIG. 20) and a carrier 451-9 (e.g., the first carrier 451 of FIGS. 5 to 15, the carrier 451-1 of FIG. 16, the carrier 451-2 of FIG. 17, the carrier 451-3 of FIG. 18, the carrier 451-4 of FIG. 19, the carrier 451-5 of FIG. 20, the carrier 451-6 of FIG. 21, the carrier 451-7 of FIG. 22, and/or the carrier 451-8 of FIG. 23). The carrier 451-9 may include the first carrier part 452A and the second carrier part 452B. The carrier 451-9 may include the first area A1 and the second area A2.

The camera module 400-9 may include a baffle 490A-9 (e.g., the first baffle 490A of FIGS. 5 to 15) configured to be coupled to the carrier 451-9 as a separate component. The baffle 490A-9 may be disposed in the second area A2. The baffle 490A-9 may include a base portion 490A-91 extending between the first carrier part 452A and the second carrier part 452B and coupling portions 490A-92 configured to couple the base portion 490A-91 to each of the first carrier part 452A and the second carrier part 452B. The base portion 490A-91 may include at least one wall (e.g., the first wall W1 of FIGS. 5 to 15). The coupling structure of the baffle 490A-9 may increase the coupling strength of the first carrier part 452A and the second carrier part 452B. Manufacturing the baffle 490A-9 as a separate component from the carrier 451-9 may provide flexibility for changing the process according to various manufacturing entities, for example, by first coupling the carrier 451-9 to the baffle 490A-9 to implement the performance of an actuator and then moving on to the process of coupling the lens assembly 420B.

The baffle 490A-9 may be disposed in the second area A2 behind (e.g., an -X direction) the lens assembly 420B. This may suppress a flare phenomenon in an image by blocking stray light coming through other optical paths, other than an optical path from the lens assembly 420B to an image sensor (e.g., the image sensor 431 of FIGS. 5 to 15).

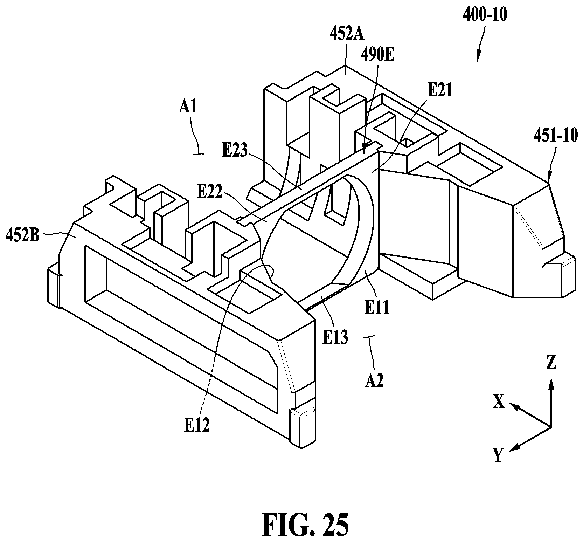

FIG. 25 is a perspective view of a carrier of a camera module, according to various embodiments.

Referring to FIG. 25, a camera module 400-10 (e.g., the camera module 180 of FIGS. 1 and 2, the second camera module 380B and/or the third camera module 380D of FIG. 4, the camera module 400 of FIGS. 5 to 15, the camera module 400-1 of FIG. 16, the camera module 400-2 of FIG. 17, the camera module 400-3 of FIG. 18, the camera module 400-4 of FIG. 19, the camera module 400-5 of FIG. 20, the camera module 400-6 of FIG. 21, the camera module 400-7 of FIG. 22, the camera module 400-8 of FIG. 23, and/or the camera module 400-9 of FIG. 24) may include a carrier 451-10 (e.g., the first carrier 451 of FIGS. 5 to 15, the carrier 451-1 of FIG. 16, the carrier 451-2 of FIG. 17, the carrier 451-3 of FIG. 18, the carrier 451-4 of FIG. 19, the carrier 451-5 of FIG. 20, the carrier 451-6 of FIG. 21, the carrier 451-7 of FIG. 22, the carrier 451-8 of FIG. 23, and/or the carrier 451-9 of FIG. 24). The carrier 451-10 may include the first carrier part 452A and the second carrier part 452B. The carrier 451-10 may include the first area A1 and the second area A2.

The carrier 451-10 may include a baffle 490E. The baffle 490E may include the first extension E11 extending along a portion (e.g., a half portion) of an inner surface (e.g., a surface in a +Y direction) of the first carrier part 452A, the second extension E12 extending along a portion (e.g., a half portion) of an inner surface (e.g., a surface in a - Y direction) of the second carrier part 452B, the third extension E13 extending between the first extension E11 and the second extension E12, the fourth extension E21 extending along a remaining portion (e.g., a half portion) of the inner surface (e.g., a surface in a +Y direction) of the first carrier part 452A, the fifth extension E22 extending along a remaining portion (e.g., a half portion) of the inner surface (e.g., a surface in a -Y direction) of the second carrier part 452B, and the sixth extension E23 extending between the fourth extension E21 and the fifth extension E22.

The first extension E11, the second extension E12, and the third extension E13 may define a portion of the opening OP (e.g., a half portion of the perimeter of the opening OP) aligned with a lens (e.g., the second lens 421B of FIGS. 5 to 15) of a lens assembly (e.g., the second lens assembly 420B of FIGS. 5 to 15) disposed in the first area A1. The fourth extension E21, the fifth extension E22, and the sixth extension E23 may define a remaining portion of the opening OP (e.g., a remaining half portion of the perimeter of the opening OP).

The first extension E11, the second extension E12, the third extension E13, the fourth extension E21, the fifth extension E22, and the sixth extension E23 may be integrally formed as one component.

The baffle 490E may be positioned in the second area A2. The first extension E11 and the fourth extension E21 may be disposed on an inner side surface (e.g., a surface in a +Y direction) of the first carrier part 452A, the second extension E12 and the fifth extension E22 may be disposed on an inner side surface (e.g., a surface in a -Y direction) of the second carrier part 452B, and the third extension E13 and the sixth extension E23 may be disposed to be opposite to each other with respect to the opening OP.

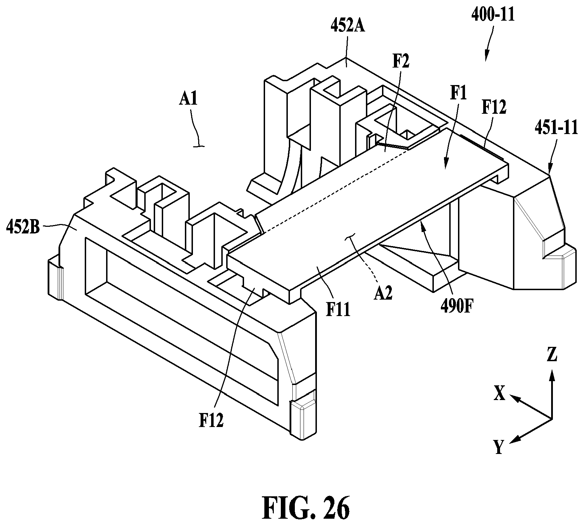

FIG. 26 is a perspective view of a carrier of a camera module, according to various embodiments.

Referring to FIG. 26, a camera module 400-11 (e.g., the camera module 180 of FIGS. 1 and 2, the second camera module 380B and/or the third camera module 380D of FIG. 4, the camera module 400 of FIGS. 5 to 15, the camera module 400-1 of FIG. 16, the camera module 400-2 of FIG. 17, the camera module 400-3 of FIG. 18, the camera module 400-4 of FIG. 19, the camera module 400-5 of FIG. 20, the camera module 400-6 of FIG. 21, the camera module 400-7 of FIG. 22, the camera module 400-8 of FIG. 23, the camera module 400-9 of FIG. 24, and/or the camera module 400-10 of FIG. 25) may include a carrier 451-11 (e.g., the first carrier 451 of FIGS. 5 to 15, the carrier 451-1 of FIG. 16, the carrier 451-2 of FIG. 17, the carrier 451-3 of FIG. 18, the carrier 451-4 of FIG. 19, the carrier 451-5 of FIG. 20, the carrier 451-6 of FIG. 21, the carrier 451-7 of FIG. 22, the carrier 451-8 of FIG. 23, the carrier 451-9 of FIG. 24, and/or the carrier 451-10 of FIG. 25). The carrier 451-11 may include the first carrier part 452A and the second carrier part 452B. The carrier 451-11 may include the first area A1 and the second area A2.

The carrier 451-11 may include a baffle 490F. The baffle 490F may be disposed in the second area A2. The baffle 490F may include a first baffle portion F1 extending between the first carrier part 452A and the second carrier part 452B and a second baffle portion F2 formed seamlessly and integrally with the first baffle portion F1 and having a width (e.g., a dimension in a Y-axis direction) that decreases along a length (e.g., a dimension in an X-axis direction) of the first carrier part 452A and a length (e.g., a dimension in an X-axis direction) of the second carrier part 452B between the first carrier part 452A and the second carrier part 452B. The first baffle portion F1 may include a base portion F11 (e.g., the base portion 490A-91 of FIG. 24) having a substantially predetermined width (e.g., a dimension in a Y-axis direction) along the length (e.g., a dimension in an X-axis direction) of the first carrier part 452A and the length (e.g., a dimension in an X-axis direction) of the second carrier part 452B and coupling portions F12 (e.g., the coupling portions 490A-92 of FIG. 24) configured to couple the base portion F11 to each of the first carrier part 452A and the second carrier part 452B.

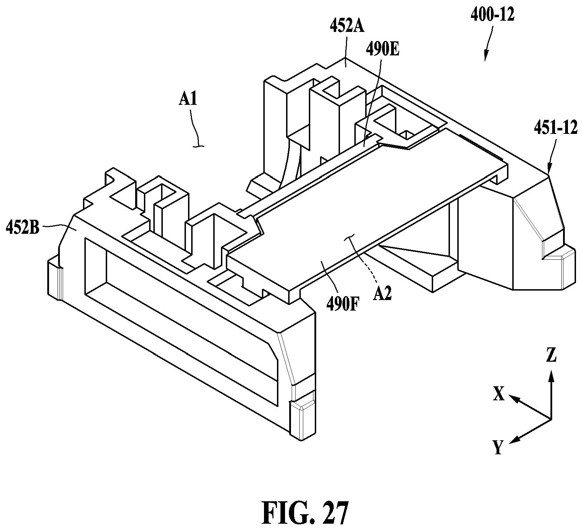

FIG. 27 is a perspective view of a carrier of a camera module, according to various embodiments.

Referring to FIG. 27, a camera module 400-12 (e.g., the camera module 180 of FIGS. 1 and 2, the second camera module 380B and/or the third camera module 380D of FIG. 4, the camera module 400 of FIGS. 5 to 15, the camera module 400-1 of FIG. 16, the camera module 400-2 of FIG. 17, the camera module 400-3 of FIG. 18, the camera module 400-4 of FIG. 19, the camera module 400-5 of FIG. 20, the camera module 400-6 of FIG. 21, the camera module 400-7 of FIG. 22, the camera module 400-8 of FIG. 23, the camera module 400-9 of FIG. 24, the camera module 400-10 of FIG. 25, and/or the camera module 400-11 of FIG. 26) may include a carrier 451-12 (e.g., the first carrier 451 of FIGS. 5 to 15, the carrier 451-1 of FIG. 16, the carrier 451-2 of FIG. 17, the carrier 451-3 of FIG. 18, the carrier 451-4 of FIG. 19, the carrier 451-5 of FIG. 20, the carrier 451-6 of FIG. 21, the carrier 451-7 of FIG. 22, the carrier 451-8 of FIG. 23, the carrier 451-9 of FIG. 24, the carrier 451-10 of FIG. 25, and/or the carrier 451-11 of FIG. 26). The carrier 451-12 may include the first carrier part 452A and the second carrier part 452B. The carrier 451-12 may include the first area A1 and the second area A2.

The carrier 451-12 may include a first baffle 490E (e.g., the baffle 490E of FIG. 25) and a second baffle 490F (e.g., the baffle 490F of FIG. 26). The first baffle 490E and the second baffle 490F may be disposed in the second area A2.

The first baffle 490E and the second baffle 490F may be arranged along the length (e.g., a dimension in an X-axis direction) of the first carrier part 452A and the length (e.g., a dimension in an X-axis direction) of the second carrier part 452B. For example, the first baffle 490E may be disposed closer to the first area A1 than the second baffle 490F.

The first baffle 490E and the second baffle 490F may be coupled to the first carrier part 452A and the second carrier part 452B as separate components, respectively.

Various example embodiments of the disclosure may provide a camera module including a carrier.

The camera module 400-3 may include the lens 421B having the optical axis OA, the lens housing 422B configured to house the lens 421B, and the carrier 451-3 configured to carry the lens housing 422B along the optical axis OA. The carrier 451-3 may include the first carrier part 452A configured to support the first portion of the lens housing 422B, the second carrier part 452B configured to support the second portion of the lens housing 422B, which is opposite to the first portion of the lens housing 422B, in which the second carrier part 452B may be a separate component from the first carrier part 452A, and the first area A1 in which the third portion of the lens housing 422B between the first portion and the second portion of the lens housing 422B is opened.

The fourth portion of the lens housing 422B, which is between the first portion and the second portion of the lens housing 422B and is opposite to the third portion of the lens housing 422B, may be opened in the first area A1.

The carrier 451 may include the second area A2 in which the lens housing 422B is not disposed and the bridge 453 positioned in the second area A2 and configured to connect the first carrier part 452A to the second carrier part 452B.

The carrier 451 may include the baffle 490B disposed in the bridge 453. The baffle 490B may include at least one wall W2.

The carrier 451 may include the first recess R11 or R12 formed on the side surface of at least one of the first carrier part 452A and the second carrier part 452B and the first magnet M11 or M12 disposed in the first recess R11 or R12.

The first recess R11 or R12 may include a metal material.

The carrier 451 may include the second recess R21 or R22 formed on the base surface of at least one of the first carrier part 452A and the second carrier part 452B and the second magnet M21 or M22 disposed in the second recess R21 or R22.

The second recess R21 or R22 may include a metal material.

The first carrier part 452A and the second carrier part 452B may be disposed substantially parallel to each other.

The first carrier part 452A may include the first guide G1. The second carrier part 452B may include the second guide G2.

The lens housing 422B may include the first wing WG1 disposed in the first portion of the lens housing 422B and the second wing WG2 disposed in the second portion of the lens housing 422B. The first carrier part 452A may include the first depression D1 on which the first wing WG1 is seated. The second carrier part 452B may include the second depression D2 on which the second wing WG2 is seated.

The first depression D1 and the second depression D2 may each include a metal material.

The first wing WG1 and the second wing WG2 may each include a metal material.

The first carrier part 452A and the second carrier part 452B may each include the cutting portion P1.

The carrier 451-12 may include the second area A2 in which the lens housing 422B is not disposed and the first baffle 490F positioned in the second area A2 and coupled to the first carrier part 452A and the second carrier part 452B.

The carrier 451-12 may include the second baffle 490E disposed between the lens housing 422B and the first baffle 490F and coupled to the first carrier part 452A and the second carrier part 452B.

The camera module 400 may include the lens 421B having the optical axis OA, the lens housing 422B configured to house the lens 421B, and the carrier 451 configured to carry the lens housing 422B along the optical axis OA. The carrier 451 may include the first carrier part 452A configured to support the first portion of the lens housing 422B, the second carrier part 452B configured to support the second portion of the lens housing 422B, which is opposite to the first portion of the lens housing 422B, in which the second carrier part 452B may be integrally formed with the first carrier part 452A, the first area A1 in which the third portion of the lens housing 422B between the first portion and the second portion of the lens housing 422B is opened, the second area A2 in which the lens housing 422B is not disposed, and the first baffle 490C positioned in the second area A2.

The first baffle 490C may include the first extension E11 extending along a portion of the inner perimeter of the first carrier part 452A, the second extension E12 extending along a portion of the inner perimeter of the second carrier part 452B, and the third extension E13 extending between the first extension E11 and the second extension E12. The first extension E11, the second extension E12, and the third extension E13 may define a portion of the opening OP aligned with the lens 421B.

The carrier 451-2 may include the second baffle 490D coupled to the first carrier part 452A and the second carrier part 452B. The second baffle 490D may include the fourth extension E21 extending along a remaining portion of the inner perimeter of the first carrier part 452A, the fifth extension E22 extending along a remaining portion of the inner perimeter of the second carrier part 452B, and the sixth extension E23 extending between the fourth extension E21 and the fifth extension E22. The fourth extension E21, the fifth extension E22, and the sixth extension E23 may define a remaining portion of the opening OP.

The electronic device 301 may include the camera modules 400 to 400-3.

According to an embodiment, the height of the camera module may be maintained or reduced.

The effects of the camera module according to the disclosure are not limited to those mentioned above, and other effects not mentioned may be clearly understood by those skilled in the art from the disclosure.

The embodiments of the present disclosure are intended to be illustrative and not restrictive. Various modifications may be made to the detailed description of the disclosure including the accompanying scope of claims and equivalents. Any of the embodiment(s) described herein may be used in combination with the embodiment(s) described herein.

## Claims

1. A camera module (400-3) comprising:
a lens (421B) having an optical axis (OA);
a lens housing (422B) configured to house the lens (421B); and
a carrier (451-3) configured to carry the lens housing (422B) along the optical axis (OA),
wherein the carrier (451-3) comprises:
a first carrier part (452A) configured to support a first portion of the lens housing (422B);
a second carrier part (452B) configured to support a second portion of the lens housing (422B), which is opposite to the first portion of the lens housing (422B), wherein the second carrier part (452B) is a separate component from the first carrier part (452A); and
a first area (A1) in which a third portion of the lens housing (422B) between the first portion and the second portion of the lens housing (422B) is opened.

2. The camera module of claim 1, wherein a fourth portion of the lens housing (422B) between the first portion and the second portion of the lens housing (422B) and opposite to the third portion of the lens housing (422B), is open in the first area (A1).

3. The camera module of claim 1 or 2, wherein the carrier (451) further comprises:
a second area (A2) in which the lens housing (422B) is not disposed; and
a bridge (453) positioned in the second area (A2) and configured to connect the first carrier part (452A) to the second carrier part (452B),
preferably, wherein the carrier (451) further comprises a baffle (490B) disposed in the bridge (453), the baffle (490B) comprising at least one wall (W2).

4. The camera module of any one of claims 1 to 3, wherein the carrier (451) further comprises:
a first recess (R11, R12) formed on a side surface of at least one of the first carrier part (452A) and the second carrier part (452B); and
a first magnet (M11, M12) disposed in the first recess (R11, R12), preferably, wherein the first recess (R11, R12) comprises a metal material.

5. The camera module of any one of claims 1 to 4, wherein the carrier (451) further comprises:
a second recess (R21, R22) formed on a base surface of at least one of the first carrier part (452A) and the second carrier part (452B); and
a second magnet (M21, M22) disposed in the second recess (R21, R22),
preferably, wherein the second recess (R21, R22) comprises a metal material.

6. The camera module of any one of claims 1 to 5, wherein the first carrier part (452A) and the second carrier part (452B) are disposed substantially parallel to each other.

7. The camera module of any one of claims 1 to 6, wherein the first carrier part (452A) comprises a first guide (G1), and the second carrier part (452B) comprises a second guide (G2).

8. The camera module of any one of claims 1 to 7, wherein the lens housing (422B) comprises:
a first wing (WG1) disposed in the first portion of the lens housing (422B); and
a second wing (WG2) disposed in the second portion of the lens housing (422B),
wherein the first carrier part (452A) comprises a first depression (D1) on which the first wing (WG1) is seated, and
wherein the second carrier part (452B) comprises a second depression (D2) on which the second wing (WG2) is seated.

9. The camera module of claim 8, wherein the first depression (D1) and the second depression (D2) each comprise a metal material.

10. The camera module of claim 8 or 9, wherein the first wing (WG1) and the second wing (WG2) each comprise a metal material.

11. The camera module of any one of claims 1 to 10, wherein the first carrier part (452A) and the second carrier part (452B) each comprise a cutting portion (P1).

12. The camera module of any one of claims 1 to 11, wherein the carrier (451-12) further comprises:
a second area (A2) in which the lens housing (422B) is not disposed; and
a first baffle (490F) positioned in the second area (A2) and coupled to the first carrier part (452A) and the second carrier part (452B),
preferably, wherein the carrier (451-12) further comprises a second baffle (490E) disposed between the lens housing (422B) and the first baffle (490F) and coupled to the first carrier part (452A) and the second carrier part (452B).

13. A camera module (400) comprising:
a lens (421B) having an optical axis (OA);
a lens housing (422B) configured to house the lens (421B); and
a carrier (451) configured to carry the lens housing (422B) along the optical axis (OA),
wherein the carrier (451) comprises:
a first carrier part (452A) configured to support a first portion of the lens housing (422B);
a second carrier part (452B) configured to support a second portion of the lens housing (422B), which is opposite to the first portion of the lens housing (422B), wherein the second carrier part (452B) is integrally formed with the first carrier part (452A);
a first area (A1) in which a third portion of the lens housing (422B) between the first portion and the second portion of the lens housing (422B) is open;
a second area (A2) in which the lens housing (422B) is not disposed; and
a first baffle (490C) positioned in the second area (A2).

14. The camera module of claim 13, wherein the first baffle (490C) comprises:
a first extension (E11) extending along a portion of an inner perimeter of the first carrier part (452A);
a second extension (E12) extending along a portion of an inner perimeter of the second carrier part (452A); and
a third extension (E13) extending between the first extension (E11) and the second extension (E12),
wherein the first extension (E11), the second extension (E12), and the third extension (E13) define a portion of an opening (OP) aligned with the lens (421B),
preferably, wherein the carrier (451-2) comprises a second baffle (490D) coupled to the first carrier part (452A) and the second carrier part (452B),
wherein the second baffle (490D) comprises:
a fourth extension (E21) extending along a remaining portion of the inner perimeter of the first carrier part (452A);
a fifth extension (E22) extending along a remaining portion of the inner perimeter of the second carrier part (452B); and
a sixth extension (E23) extending between the fourth extension (E21) and the fifth extension (E22), and
wherein the fourth extension (E21), the fifth extension (E22), and the sixth extension (E23) define a remaining portion of the opening (OP).

15. An electronic device (301) comprising the camera module (400; 400-3) according to any one of claims 1 to 14.
